# EUROPÄISCHE PATENTSCHRIFT

(11) **EP 3 965 991 B1**
(45) Veröffentlichungstag und Bekanntmachung des Hinweises auf die Patenterteilung: **10.06.2026**
(21) Anmeldenummer: 20725136.4
(22) Anmeldetag: 06.05.2020
(51) Int. Cl.: B23Q 1/01, B23Q 3/157, B23Q 39/04

(54) **WERKZEUGMASCHINE MIT PORTAL**
MACHINE TOOL HAVING A GANTRY
MACHINE-OUTIL ÉQUIPÉE D'UN PORTIQUE

(30) Priorität: 07.05.2019 DE 102019111873
(43) Veröffentlichungstag der Anmeldung: 16.03.2022
(73) Patentinhaber: CHIRON Group SE, 78532 Tuttlingen (DE)
(72) Erfinder: HALTMEYER, Tobias, 78315 Radolfzell (DE); RAFFKE, Karl-Heinz, 78554 Aldingen (DE); GEMS, Daniel, 78607 Talheim (DE); EPPLER, Claus, 72469 Messstetten (DE)
(74) Vertreter: Witte, Weller & Partner Patentanwälte mbB
(86) Internationale Anmeldenummer: PCT/EP2020/062599
(87) Internationale Veröffentlichungsnummer: WO 2020/225312

(56) Entgegenhaltungen:
- EP-A1- 1 882 544
- EP-A1- 2 082 831
- EP-A1- 2 842 705
- EP-A1- 2 992 994
- AT-A4- 520 288
- CN-A- 105 458 358
- CN-A- 108 655 472
- CN-B- 104 440 394
- DE-A1- 102017 122 439
- DE-U1- 202008 005 773
- JP-A- 2010 052 068
- US-A1- 2006 269 375

## Beschreibung

Die vorliegende Offenbarung bezieht sich auf eine Werkzeugmaschine mit einem Gestell, das ein feststehendes Portal zur Aufnahme zumindest einer Werkzeugspindel trägt, wobei das Portal eine Portalausnehmung aufweist, durch die ein Arbeitsraum zugänglich ist, wobei die oder jede Werkzeugspindel am Portal jeweils in einer ersten Richtung vertikal und einer zur ersten Richtung orthogonalen zweiten Richtung verfahrbar ist, und mit einem Werkstücktisch mit zumindest einem Platz zur Werkstückaufnahme, wobei der Werkstücktisch in einer zur ersten Richtung und zweiten Richtung orthogonalen dritten Richtung translatorisch verfahrbar ist.

Aus der EP 1 882 544 A1 ist eine derartige Werkzeugmaschine bekannt, mit einem Maschinengestell, das zwei parallele Seitenwände und einen oberen Querträger aufweist, der auf den beiden Seitenwänden befestigt ist, mit einer in mindestens zwei Koordinatenachsen motorisch verfahrbaren Bearbeitungseinheit, die eine drehangetriebene Arbeitsspindel mit einwechselbaren Werkzeugen enthält, und mit einem Vorbau, der zwei quer beabstandete horizontale Führungsschienen aufweist, auf denen eine Werkstück-Tischanordnung mit einer Tischplatte zum Aufspannen eines Werkstücks in einer horizontalen Koordinatenachse motorisch verfahrbar angeordnet ist.

Die bekannte Werkzeugmaschine erlaubt eine Mehrachs-Bearbeitung, wobei neben drei translatorischen Achsen zwei weitere Schwenkachsen zur Verfügung stehen. Auf diese Weise können diverse Bearbeitungen durchgeführt werden.
Aus der DE 20 2005 005 773 U1, die die Basis für den Oberbegriff des Anspruchs 1 bildet, ist eine Werkzeugmaschine zur spanabhebenden Bearbeitung bekannt, mit zwei verfahrbar an einem Portal angeordneten Spindelstöcken, die jeweils eine Werkzeugspindel aufweisen, wobei links und rechts vom Portal jeweils ein als Radmagazin gestaltetes Werkzeugmagazin angeordnet ist, das für eine der beiden Werkzeugspindeln für einen Werkzeugwechsel erreichbar ist, wobei das Portal eine Portalöffnung aufweist, durch die sich zwei bodenseitige Führungen für einen Werkstückträger erstrecken, wobei die beiden Radmagazine auf der Seite des Portals angeordnet sind, auf der die Werkzeugspindeln angeordnet sind, und wobei die zwei bodenseitigen Führungen zwischen den beiden Radmagazinen angeordnet sind.
Aus der JP 2010 052068 A ist eine Werkzeugmaschine in Portalbauweise bekannt, mit einem Maschinenbett, das ein feststehendes Portal mit einer Portalöffnung trägt, die zwischen zwei Portalstützen angeordnet ist, wobei am Portal eine Werkzeugspindel gelagert ist, die in zumindest zwei Richtungen relativ zum Portal verfahrbar ist, wobei am Maschinenbett zwei Führungen für einen Werkstückträger angeordnet sind, die sich durch das Portal hindurch erstrecken, und wobei ein umlaufendes Werkzeugmagazin vorgesehen ist, dessen umlaufender Strang eine der beiden Portalstützen umgibt, wobei das Werkzeugmagazin vor dem Portal für die Werkzeugspindel für einen Werkzeugwechsel erreichbar ist.
Aus der EP 2 992 994 A1 ist eine Werkzeugmaschine bekannt, mit einem Maschinenbett, das einen ähnlich einem Stufenbarren gestalteten Ständer trägt, auf dem ein Schlitten gelagert ist, der eine zwischen zwei parallelen Führungen des Ständers angeordnete, hängende Werkzeugspindel trägt, wobei ein als Radmagazin gestaltetes Werkzeugmagazin vorgesehen ist, das einer Stirnseite des Ständers benachbart und für die entlang der zwei parallelen Führungen verfahrbare Werkzeugspindel für einen Werkzeugwechsel erreichbar ist.

Aus der DE 10 2017 122 439 A1 ist eine Werkzeugmaschine in Portalbauweise bekannt. Die Werkzeugmaschine umfasst zwei mittig hinter dem Portal angeordnete Werkzeugmagazine und diesen zugeordnete Werkzeugwechsler auf, die Werkzeuge durch die Hauptöffnung des Portals hindurch zwischen den Werkzeugmagazinen und einer jeweiligen Wechselposition transferieren.

Aus der DE 100 49 810 A1 ist eine Werkzeugmaschine bekannt, bei der der Werkstückträger an einem vertikalen Ständer vertikal verfahrbar ist und eine horizontale Drehachse für das Werkstück aufweist. Es ist zumindest eine Werkzeugspindel mit horizontaler Ausrichtung vorgesehen, welche an einem Querbalken eines Portals parallel zur horizontalen Drehachse des Werkstückträgers verfahrbar ist. Der Ständer für den Werkstückträger und das Portal für die zumindest eine Werkzeugspindel bilden gemeinsam ein Gestell. Zwischen einer Vertikalführung des Werkstückträgers und einer Horizontalführung der Werkzeugspindel ist im Gestell eine schlitzartige Ausnehmung vorgesehen, in der ein Werkzeugmagazin in vertikaler Orientierung mit horizontal ausgerichteten Werkzeugen angeordnet ist. Die Werkzeuge gelangen zwischen der Werkzeugspindel und dem Werkstückträger in den Arbeitsraum.

Auf dem Gebiet der Werkzeugmaschinen wird regelmäßig eine Verbesserung der Effizienz bzw. Produktivität gefordert. Dies soll jedoch nicht zu Lasten der Bearbeitungsgenauigkeit und der Prozesssicherheit gehen. Ferner soll die Bearbeitung möglichst hochautomatisiert erfolgen, umfassend beispielsweise einen teilautomatisierten oder automatisierten Werkstückwechsel sowie einen teilautomatisierten oder automatisierten Werkzeugwechsel.

Ferner gibt es verschiedenste Bearbeitungsaufgaben, so dass eine Werkzeugmaschine einerseits möglichst universell einsetzbar ist. Andererseits gibt es Forderungen nach Spezialmaschinen, welche spezifische Bearbeitungsaufgaben mit hoher Effizienz durchführen können. Ferner gibt es häufig einen Zielkonflikt zwischen der universellen Eignung der Werkzeugmaschine für Bauteile unterschiedlicher Geometrie mit erheblichen Abmessungen, der erzielbaren maximalen Genauigkeit sowie der Produktivität. Beispielsweise geht eine Vergrößerung des Arbeitsraums zur Bearbeitung größerer Bauteile häufig mit einer Erhöhung der Verfahrwege einher, so dass sich die Steifigkeit ohne Zusatzmaßnahmen womöglich verschlechtern würde.

Vor diesem Hintergrund liegt der vorliegenden Offenbarung die Aufgabe zugrunde, eine Werkzeugmaschine zur Bearbeitung von Werkstücken anzugeben, welche bei hoher Leistungsfähigkeit und kurzen Nebenzeiten eine zumindest teilautomatisierte Mehrachs-Bearbeitung in einem Bauraum zumindest mittlerer Größe ermöglicht. Vorzugweise eignet sich die Werkzeugmaschine zur Bearbeitung von Strukturbauteilen, beispielsweise zur Bearbeitung tragender Karosseriebauteile oder ähnlicher im Betrieb belasteter Bauteile.

Vorzugsweise ist die Werkzeugmaschine als Doppelspindelmaschine zur Nutzung zweier Werkzeugspindeln ausgestaltet. Vorzugsweise erlaubt die Werkzeugmaschine eine parallele Bearbeitung zweier Werkstücke zur Erhöhung der Produktivität. Vorzugsweise erlaubt die Werkzeugmaschine einen vollautomatischen Werkzeugwechsel. Vorzugsweise erlaubt die Werkzeugmaschine, zumindest in beispielhaften Ausgestaltungen, einen vollautomatischen Werkstückwechsel. Vorzugsweise stellt die Werkzeugmaschine einen gut zugänglichen und möglichst wenig verbauten Arbeitsraum bereit. Vorzugsweise stellt die Werkzeugmaschine bei einem gegebenen Gesamtvolumen bzw. einer gegebenen Gesamt-Stellfläche einen großen Arbeitsraum für die Bearbeitung bereit.

Die Aufgabe der Offenbarung wird durch eine Werkzeugmaschine gelöst, mit einem Gestell, das ein feststehendes Portal zur Aufnahme zumindest einer Werkzeugspindel trägt, wobei das Portal eine Portalausnehmung aufweist, durch die ein Arbeitsraum zugänglich ist, wobei die oder jede Werkzeugspindel am Portal jeweils in einer ersten Richtung (Z-Richtung) vertikal und einer zur ersten Richtung orthogonalen zweiten Richtung (X-Richtung) verfahrbar ist, und mit einem Werkstücktisch mit zumindest einem Platz zur Werkstückaufnahme, wobei der Werkstücktisch in einer zur ersten Richtung und zweiten Richtung orthogonalen dritten Richtung (Y-Richtung) translatorisch verfahrbar ist, wobei der oder jeder Werkzeugspindel zumindest ein Werkzeugmagazin zugeordnet ist, wobei der Werkzeugwechsel zwischen der oder jeder Werkzeugspindel und dem zumindest einen Werkzeugmagazin im Pick-Up-Verfahren erfolgt, wobei das Portal zwei Magazinöffnungen aufweist, durch die zumindest zwei Werkzeugmagazine zugänglich sind, umfassend ein erstes Werkzeugmagazin und ein zweites Werkzeugmagazin, wobei Werkzeuge zum Werkzeugwechsel durch die zwei zusätzlich zur und separat von der Portalausnehmung vorgesehenen Magazinöffnungen zuführbar sind, und wobei das erste Werkzeugmagazin oberhalb einer ersten Längsführung und das zweite Werkzeugmagazin oberhalb einer zweiten Längsführung für den Werkstücktisch angeordnet ist.

Auf diese Weise wird die Aufgabe der Erfindung vollkommen gelöst.

Erfindungsgemäß ist jeder Werkzeugspindel ein Magazin mit Werkzeugplätzen zum Werkzeugwechsel zugeordnet, beispielsweise benachbart. Durch die benachbarte Anordnung kann die Werkzeugspindel direkt im Pick-Up-Verfahren Werkzeuge vom Magazin aufnehmen sowie Werkzeuge an das Magazin abgeben. Die hierzu erforderlichen Verfahrwege für die Werkzeugspindel sind hinreichend kurz, so dass sich die Nebenzeiten reduzieren lassen. Ferner ermöglicht die direkte, unmittelbare Übergabe von Werkzeugen zwischen der zumindest einen Werkzeugspindel und dem Magazin den Verzicht auf separate Handhabungstechnik und hierfür erforderliche Antriebe. Dies hat den Vorteil, dass der zur Verfügung stehende Arbeitsraum auch tatsächlich zu großen Teilen für die Bearbeitung zur Verfügung steht. Ferner verringert der Verzicht auf zusätzliche Handhabungstechnik, etc. für den Werkzeugwechsel den Aufwand für die Steuerung des Werkzeugwechselvorgangs. Ein weiterer Vorteil ist der verringerte Aufwand für die Reinigung (Späne, KSS, etc.).

Die Magazinöffnungen sind zusätzlich zur Portalöffnung im Portal vorgesehen, zumindest in beispielhaften Ausführungsformen. Beispielhaft ergibt sich bei einer Gestaltung mit zwei Werkzeugspindeln ein Portal mit einer mittigen Portalöffnung und zwei seitlich davon angeordneten Magazinöffnungen. Die Portalöffnung ist in diesem Ausführungsbeispiel zwischen den beiden Magazinöffnungen angeordnet. Demgemäß sind Gestaltungen vorstellbar, bei denen die Magazinöffnungen nicht unmittelbar an den Arbeitsraum ankoppeln. Stattdessen lässt sich ein Werkzeugwechselbereich außerhalb des Arbeitsraums realisieren, so dass der Arbeitsraum nicht beeinträchtigt wird. Ein Vorteil dieser Gestaltung ist, dass während der Bearbeitung im Arbeitsraum der Werkzeugwechselbereich für die Bereitstellung oder Abfuhr von Werkzeugen nutzbar ist. In beispielhaften Ausführungsformen ist demgemäß der Werkzeugwechselbereich seitlich vom eigentlichen Arbeitsraum ausgebildet. Bei der Gestaltung mit zwei Werkzeugspindeln ist ein erster Wechselbereich links und ein zweiter Wechselbereich rechts vom Arbeitsraum angeordnet. Dies ist nicht einschränkend zu verstehen.

Gemäß dem obigen Aspekt stellt das Portal zwei Magazinöffnungen bereit, durch die die Werkzeuge zugeführt und abgeführt werden können. Wenn neben der Portalausnehmung zumindest eine Magazinöffnung für den Werkzeugwechsel bereitsteht, dann kann die eigentliche Portalausnehmung für andere Zwecke genutzt werden. Ferner ergibt sich ein freier Blick und ein besserer Zugang durch die Portalausnehmung zum Arbeitsraum. Ein weiterer Vorteil ist die Separierung zwischen Werkzeugwechsel (durch die Magazinöffnung) und einem anderweitigen Zugang (Portalausnehmung) zum Arbeitsraum.

Gemäß einem weiteren Aspekt wird die Aufgabe der Offenbarung durch eine Werkzeugmaschine gelöst, mit einem Gestell, das ein feststehendes Portal zur Aufnahme zumindest einer Werkzeugspindel trägt, wobei das Portal eine Portalausnehmung aufweist, durch die ein Arbeitsraum zugänglich ist, wobei die oder jede Werkzeugspindel am Portal jeweils in einer ersten Richtung (Z-Richtung) vertikal und einer zur ersten Richtung orthogonalen zweiten Richtung (X-Richtung) verfahrbar ist, und mit einem Werkstücktisch mit zumindest einem Platz zur Werkstückaufnahme, wobei der Werkstücktisch in einer zur ersten Richtung und zweiten Richtung orthogonalen dritten Richtung (Y-Richtung) translatorisch verfahrbar ist, wobei der Werkstücktisch um eine zur zweiten Richtung (X-Richtung) parallele Achse (A-Achse) schwenkbar ist, und wobei sowohl für die translatorische Bewegung als auch die Schwenkbewegung des Werkstücktisches jeweils zwei voneinander beabstandete, gemeinsam angesteuerte Antriebe vorgesehen sind.

Auch auf diese Weise wird die Aufgabe der Erfindung vollkommen gelöst.

Erfindungsgemäß erlaubt nämlich die Bereitstellung zweier voneinander beabstandeter Antriebe sowohl für die translatorische Bewegung des Werkstücktisches als auch für die rotatorische Bewegung des Werkstücktisches auch bei beträchtlichen Abmessungen des Tisches eine hinreichend hohe und reproduzierbare Genauigkeit auch bei großen Werkstücken. Ferner können sich höhere Beschleunigungen und Maximalgeschwindigkeiten für die translatorische Bewegung und die Schwenkbewegung ergeben. Wenn zwei voneinander beabstandete Antriebe vorgesehen sind, können bestimmte Lastsituationen steuerungstechnisch erfasst werden. Dies kann zumindest in beispielhaften Ausgestaltungen ohne separate Sensoren erfolgen, wenn Kennwerte der Antriebe überwacht werden. In einer beispielhaften Ausgestaltung wird die Stromaufnahme der Antriebe überwacht. Auf diese Weise können unterschiedliche Belastungen der beiden Antriebe einfach ermittelt werden. Wenn beispielsweise eine beträchtliche Asymmetrie vorliegt, so kann steuerungstechnisch hierauf reagiert werden.

Es versteht sich, dass die beiden zuvor genannten Aspekte miteinander kombinierbar, aber auch unabhängig voneinander implementierbar sind.

Gemäß einer beispielhaften Ausgestaltung ist am Portal eine erste Werkzeugspindel und eine zweite Werkzeugspindel angeordnet, wobei der Werkstücktisch einen ersten Platz zur Aufnahme von Werkstücken und einen zweiten Platz zur Aufnahme von Werkstücken aufweist, wobei der erste Platz der ersten Werkzeugspindel zugeordnet ist, und wobei der zweite Platz der zweiten Werkzeugspindel zugeordnet ist. Beispielhaft ist der Werkstücktisch als Wiege gestaltet, die sich zwischen zwei Schwenklagern erstreckt, die die Schwenkachse (A-Achse) parallel zur zweiten Richtung (X-Achse) definieren.

Gemäß dieser Ausgestaltung weist das Gestell mit dem Portal in der zweiten Richtung (X-Richtung) eine hinreichend große Erstreckung auf, so dass zwei Werkstückaufnahmen (etwa Paletten oder dergleichen) auf dem Werkzeugtisch angeordnet werden können. Da nun das Portal zwei Werkzeugspindeln trägt, die nebeneinander angeordnet und in der zweiten Richtung voneinander versetzt sind, können zwei Werkstücke simultan bearbeitet werden. Dies erhöht die Produktivität.

Gemäß einer beispielhaften Ausgestaltung weisen die erste Werkzeugspindel und, sofern vorhanden, die zweite Werkzeugspindel jeweils eine vertikal orientierte Spindelachse auf (parallel zur Z-Richtung). Die Werkzeugspindeln weisen eine Werkzeugaufnahme auf. Die Werkzeugaufnahme und ein daran befestigtes Werkzeug können um die Spindelachse der jeweiligen Spindel rotatorisch angetrieben werden.

Gemäß einer weiteren beispielhaften Ausgestaltung sind die erste Werkzeugspindel und die zweite Werkzeugspindel gemeinsam und synchron in der zweiten Richtung (X-Richtung) verfahrbar, wobei ein Spindelabstand an einen Abstand zwischen dem ersten Werkstückaufnahmeplatz und dem zweiten Werkstückaufnahmeplatz angepasst ist. Mit anderen Worten werden die beiden Werkzeugspindeln in diesem Betriebsmodus so betrieben, dass sich dazwischen ein fester Spindelabstand ergibt, der sich bei der Bewegung der Werkzeugspindeln in der X-Richtung nicht verändert. Auf diese Weise können zwei Bauteile, die auf den Werkstückaufnahmen am Werkstücktisch angeordnet sind, identisch oder nahezu identisch bearbeitet werden. Die beiden Werkzeugspindeln können steuerungstechnisch miteinander gekoppelt werden. Dies umfasst zumindest in beispielhaften Ausführungsformen keine feste mechanische Kopplung.

Gemäß einer beispielhaften Ausgestaltung sind die erste Werkzeugspindel und die zweite Werkzeugspindel an einer gemeinsamen Horizontalführung in der zweiten Richtung verfahrbar aufgenommen. Beispielhaft nutzen die erste Werkzeugspindel und die zweite Werkzeugspindel einen gemeinsamen Linearantrieb, insbesondere einen Lineardirektantrieb. Gemäß einer beispielhaften Ausführungsform nutzen die beiden Werkzeugspindeln ein und dasselbe Primärteil.

Die "steuerungstechnische" Kopplung der ersten Werkzeugspindel und der zweiten Werkzeugspindel in der zweiten Richtung (X-Richtung) hat den Vorteil, dass die beiden Werkzeugspindeln bei Bedarf auch unabhängig voneinander und relativ zueinander in der zweiten Richtung verfahren werden können. Dies wird in bestimmten Betriebsmodi genutzt, etwa zum Werkzeugwechsel. Gleichwohl ist es von Vorteil, wenn die beiden Werkzeugspindeln im gekoppelten Zustand als Paket gemeinsam verfahren werden können.

Gemäß einer weiteren beispielhaften Ausgestaltung erstreckt sich das zumindest eine Werkzeugmagazin zumindest abschnittsweise in die Magazinöffnung im Portal hinein. Auf diese Weise kann das Magazin von der vom Arbeitsraum abgewandten Seite des Portals bestückt werden. Das Magazin kann manuell oder automatisiert bestückt werden. Gemäß einer weiteren beispielhaften Ausgestaltung erstreckt sich das zumindest eine Werkzeugmagazin durch die Magazinöffnung hindurch.

Gemäß einer weiteren beispielhaften Ausgestaltung befindet sich das zumindest eine Werkzeugmagazin in einem Werkzeugwechselbereich außerhalb des Arbeitsraums, wobei die zumindest eine Werkzeugspindel zwischen einer Arbeitsposition im Arbeitsraum und einer Werkzeugwechselposition im Werkzeugwechselbereich verfahrbar ist. Demgemäß kann die Werkzeugspindel zwischen einem Arbeitsbereich im Arbeitsraum und dem Wechselbereich hin und her gefahren werden. Üblicherweise umfasst dies eine Bewegung in der zweiten Richtung (X-Richtung). Gemäß einer beispielhaften Ausgestaltung ist eine Trennwand/Zwischenwand zwischen dem Arbeitsraum und dem Werkzeugwechselbereich vorgesehen, wobei die Werkzeugspindel die Trennwand zum Werkzeugwechsel überwinden bzw. umfahren kann.

Gemäß einer weiteren beispielhaften Ausgestaltung umfasst die Werkzeugmaschine ein erstes Werkzeugmagazin in einem ersten Werkzeugwechselbereich und ein zweites Werkzeugmagazin in einem zweiten Werkzeugwechselbereich, wobei der Arbeitsraum zwischen dem ersten Werkzeugwechselbereich und dem zweiten Werkzeugwechselbereich angeordnet ist. Im Arbeitsraum sind bei der Gestaltung mit zwei Werkzeugspindeln ein erster Bereich für die erste Werkzeugspindel und ein zweiter Bereich für die zweite Werkzeugspindel vorgesehen. Zum Werkzeugwechsel kann die (steuerungstechnische) fixe Kopplung zwischen den beiden Spindeln aufgehoben werden. Die erste und die zweite Werkzeugspindel können voneinander weg bewegt werden, so dass die erste Werkzeugspindel in den ersten Werkzeugwechselbereich und die zweite Werkzeugspindel in den zweiten Werkzeugwechselbereich verfahrbar ist.

Gemäß einer weiteren beispielhaften Ausgestaltung sind die erste Werkzeugspindel und die zweite Werkzeugspindel, bei Verwendung einer ersten Werkzeugspindel und einer zweiten Werkzeugspindel, zum Werkzeugwechsel unabhängig voneinander in der zweiten Richtung verfahrbar, wobei die erste Werkzeugspindel zwischen dem Arbeitsraum und dem ersten Werkzeugwechselbereich verfahrbar ist, und wobei die zweite Werkzeugspindel zwischen dem Arbeitsraum und dem zweiten Werkzeugwechselbereich verfahrbar ist.

Gemäß einer weiteren beispielhaften Ausgestaltung ist die oder jede Werkzeugspindel im Werkzeugwechselbereich vertikal verfahrbar, um ein Bearbeitungswerkzeug zu wechseln, wobei zumindest ein Werkzeugplatz des zumindest einen Werkzeugmagazins für die zugeordnete Werkzeugspindel von oben vertikal zugänglich ist. Auf diese Weise können die Werkzeuge im Pick-Up-Verfahren ohne zusätzliche Handhabungstechnik direkt zwischen dem Magazin und der Werkzeugspindel umgesetzt werden. Auf diese Weise können durch eine Werkzeugaufnahme der Werkzeugspindel Werkzeuge von bestückten Werkzeugplätzen entnommen werden. Ferner kann die Werkzeugaufnahme ein zuvor eingespanntes Werkzeug an einen leeren Werkzeugplatz abgeben. Dies erfolgt in einer Wechselposition der Werkzeugspindel im Wechselbereich.

Gemäß einer weiteren beispielhaften Ausgestaltung ist das zumindest eine Werkzeugmagazin als Kettenmagazin gestaltet. Ein Kettenmagazin ist beispielhaft als umlaufende Kette mit Kettengliedern gestaltet, welche Werkzeugplätze mit Aufnahmen für Werkzeuge aufweisen oder tragen. Das Kettenmagazin umfasst zumindest einen Antrieb, über den ein aktuell gewählter Werkzeugplatz in der Kette in eine für die Übergabe des Werkzeugs geeignete Position (Y-Position) gefahren werden kann. Beispielhaft weist die Kette, zumindest bei einem dem Arbeitsraum benachbarten Trum, eine Haupterstreckungsrichtung auf, die parallel zur dritten Richtung (Y-Richtung) ist. Auf diese Weise kann sich das zumindest eine Kettenmagazin seitlich neben dem Arbeitsraum erstrecken. Dem Arbeitsraum sind in einer beispielhaften Ausgestaltung ein erstes Kettenmagazin und ein zweites Kettenmagazin benachbart, wobei sich der Arbeitsraum dazwischen erstreckt.

Erfindungsgemäß ist das erste Werkzeugmagazin oberhalb einer ersten Längsführung für den Werkstücktisch angeordnet, wobei das zweite Werkzeugmagazin oberhalb einer zweiten Längsführung angeordnet ist. Auf diese Weise wird der Bauraum oberhalb der sich in der dritten Richtung (Y-Richtung) erstreckenden Längsführungen für den Werkstücktisch für die Werkzeugmagazine genutzt. Dies trägt insgesamt zu einer kompakten Gestaltung bei. Bei gegebenen Außenabmessungen kann ein großer Arbeitsraum bereitgestellt werden.

Gemäß einer weiteren beispielhaften Ausgestaltung bildet ein der zumindest zwei Werkzeugmagazine gemeinsam mit einem weiteren Werkzeugmagazin, das im gleichen Werkzeugwechselbereich angeordnet ist, eine Magazinanordnung mit zwei Magazinen, die derart zueinander versetzt sind, dass jedes der beiden Magazine der Magazinanordnung für die zugeordnete Werkzeugspindel zugänglich ist.

Mit anderen Worten sind zwei Magazine der Anordnung auf der gleichen Seite des Arbeitsraums benachbart zu diesem angeordnet. Es versteht sich, dass eine weitere derartige Magazinanordnung auf der gegenüberliegenden Seite des Arbeitsraums angeordnet sein kann. Innerhalb der Magazinanordnung sind die beiden Magazine zumindest abschnittsweise vertikal und horizontal zueinander versetzt. Auf diese Weise ergibt sich für die Werkzeugspindel im Werkzeugwechselbereich eine erste Werkzeugwechselposition für das erste Werkzeugmagazin und eine zweite Werkzeugwechselposition für das zweite Werkzeugmagazin.

Gemäß einer beispielhaften Ausgestaltung weist die Magazinanordnung, bezogen auf den Arbeitsraum, ein oberes Magazin und ein unteres Magazin auf, wobei das untere Magazin vom oberen Magazin in Richtung auf den Arbeitsraum versetzt ist. Die beiden Werkzeugmagazine sind in der ersten Richtung (Z-Richtung) und der zweiten Richtung (X-Richtung) zueinander versetzt. Auf diese Weise sind zwei Werkzeugmagazine der Magazinanordnung terrassenartig zueinander versetzt, so dass weiterhin eine Übergabe von Werkzeugen zwischen den Werkzeugmagazinen und der Werkzeugspindel im Pick-Up-Verfahren möglich ist.

Erfindungsgemäß weist das Portal eine Magazinöffnung für jede Magazinanordnung auf. Demgemäß ist die Magazinöffnung so groß gestaltet, dass sich beide Werkzeugmagazine der Magazinanordnung zumindest abschnittsweise in die Magazinöffnung hinein erstrecken können. Gemäß einer alternativen Ausgestaltung weist das Portal für jede Magazinanordnung zwei Magazinöffnungen auf, von denen eine erste dem ersten Werkzeugmagazin und eine zweite dem zweiten Werkzeugmagazin zugeordnet ist. Sofern ein Zugang zu den Werkzeugmagazinen über eine oder beide Magazinöffnungen möglich ist, können die Magazine von der dem Arbeitsraum abgewandten Seite des Portals direkt oder indirekt bestückt werden.

Gemäß einer weiteren beispielhaften Ausgestaltung werden die beiden Antriebe für die translatorische Bewegung des Werkstücktisches synchron angesteuert. Gemäß einer weiteren beispielhaften Ausgestaltung werden die beiden Antriebe für die Schwenkbewegung des Werkstücktisches synchron angesteuert. Demgemäß kann sowohl der translatorische Antrieb als auch der Schwenkantrieb für den Werkzeugtisch nach dem Gantry-Prinzip gestaltet sein. Es ergibt sich gegenüber angetriebenen Achsen, bei denen lediglich ein Antrieb (Motor) auf ein an zwei Lagern oder Führungen aufgenommenes Element einwirkt, eine bessere Symmetrie. Dies kann eine höhere Dynamik und eine höhere Präzision bewirken. Ferner kann der Bauraum zwischen den Antrieben frei bleiben, trotzdem ergibt sich eine günstige, symmetrische Krafteinleitung.

Gemäß einer weiteren beispielhaften Ausgestaltung ist der Werkstücktisch an einem ersten Schwenklager und einem hiervon beabstandeten zweiten Schwenklager aufgenommen, wobei sich der Werkstücktisch als Wiege dazwischen erstreckt, und wobei der erste Antrieb dem ersten Schwenklager als erster Schwenkantrieb und der zweite Antrieb dem zweiten Schwenklager als zweiter Schwenkantrieb zugeordnet ist. Beispielhaft sind die beiden Schwenkantriebe jeweils als Direktantrieb gestaltet.

Gemäß einer weiteren beispielhaften Ausgestaltung ist der Werkstücktisch an einer ersten Längsführung und einer hiervon beabstandeten zweiten Längsführung aufgenommen, wobei sich der Werkstücktisch dazwischen erstreckt, und wobei der ersten Längsführung ein erster Linearantrieb und der zweiten Längsführung ein zweiter Linearantrieb zugeordnet ist. Bei dem Linearantrieb kann es sich um einen Linearmotor handeln, beispielsweise um einen Lineardirektantrieb. Andere Gestaltungen sind denkbar, etwa Gewindetriebe, etc.

Jede der beiden Längsführungen trägt einen Schlitten, wobei sich zwischen den beiden Schlitten der beispielhaft als Wiege gestaltete Werkstücktisch erstreckt. Demgemäß tragen die beiden Schlitten jeweils ein Schwenklager für den Werkstücktisch. Gemäß einer beispielhaften Ausgestaltung beherbergen die beiden Schlitten jeweils einen Schwenkantrieb für die Schwenkbewegung (A-Achse) des Werkstücktisches. Gemäß einer weiteren beispielhaften Ausgestaltung beherbergen die beiden Schlitten - zumindest teilweise - einen Linearantrieb für die translatorische Bewegung des Werkstücktisches in der dritten Richtung (Y-Achse).

Gemäß einer beispielhaften Ausgestaltung hängt der Werkstücktisch frei zwischen den beiden Schlitten. Gemäß dieser Gestaltung ist folglich keine mittige Abstützung vorgesehen. Dies hat den Vorteil, dass ein zentraler Bereich des Arbeitsraums nach unten frei ist, so dass etwa die Spanabfuhr und die Abführung von Kühlschmierstoffen (KSS) verbessert werden kann. Die Verschmutzungsneigung verringert sich.

Gemäß einer weiteren beispielhaften Ausgestaltung erstrecken sich zwischen dem Portal und dem Gestell Seitenverstrebungen, zwischen denen die erste Längsführung und die zweiten Längsführung für den Werkstücktisch angeordnet sind. Die Längsführungen sind den Seitenverstrebungen benachbart angeordnet. Beispielhaft können die Seitenverstrebungen eine sich in der dritten Richtung (Y-Richtung) erstreckende Verbindung zwischen dem Portal und dem Gestell bewerkstelligen. Dies erhöht die Steifigkeit der Werkzeugmaschine.

Gemäß einer weiteren beispielhaften Ausgestaltung weisen die Seitenverstrebungen einen ersten Knoten mit einer Spindelseite des Portals und einen zweiten Knoten mit einer Auflageseite des Gestells auf. Demgemäß umfasst diese Ausgestaltung eine sich vertikal erstreckende Ankopplung zwischen den Seitenverstrebungen und dem Portal sowie eine sich horizontal erstreckende Ankopplung zwischen den Seitenverstrebungen und dem Gestell.

Gemäß einer weiteren beispielhaften Ausgestaltung koppeln die Seitenverstrebungen jeweils an einem erhabenen Seitenprofil des Gestells an dieses an. Beispielhaft weisen die Seitenprofile eine Z-Erstreckung und eine Y-Erstreckung auf, die jeweils größer als die X-Erstreckung sind.

Gemäß einer weiteren beispielhaften Ausgestaltung weist das Gestell zwei erhabene Seitenprofile auf, die in der ersten Richtung (Z-Richtung) gegenüber einer Führungsauflage bzw. gegenüber Führungsschienen der Längsführungen für den Werkstücktisch am Gestell erhaben sind. Die Seitenprofile erhöhen die Steifigkeit des Gestells. Die beiden Längsführungen sind zwischen den beiden Seitenprofilen angeordnet. Zwischen den beiden Längsführungen ist der Arbeitsraum ausgebildet.

Gemäß einer weiteren beispielhaften Ausgestaltung weist der Werkstücktisch zwei zueinander versetzte und angetriebene Rundtische auf, deren Drehachse senkrecht zur Schwenkachse des Werkstücktisches ist, wobei die erste Werkzeugspindel einem ersten Rundtisch und die zweite Werkzeugspindel einem zweiten Rundtisch zugeordnet ist. Die Drehachsen der Rundtische können auch als C-Achsen bezeichnet werden. Die Drehachsen der Rundtische sind in diesem Ausführungsbeispiel senkrecht zur A-Achse. Es versteht sich, dass auch Gestaltungen mit nur einem drehbaren Rundtisch vorstellbar sind.

Gemäß einer weiteren beispielhaften Ausgestaltung sind die erste Werkzeugspindel und die zweite Werkzeugspindel in der zweiten Richtung (X-Richtung) am Portal derart verfahrbar, dass die erste Werkzeugspindel, ausgehend von ihrer primären Arbeitsposition mit Zuordnung zum ersten Rundtisch, in Richtung auf den zweiten Rundtisch in eine sekundäre Arbeitsposition verfahrbar ist, wenn die zweite Werkzeugspindel vom zweiten Rundtisch wegbewegt ist. Alternativ oder zusätzlich ist es vorstellbar, dass die zweite Werkzeugspindel, ausgehend von ihrer primären Arbeitsposition mit Zuordnung zum zweiten Rundtisch, in Richtung auf den ersten Rundtisch in eine sekundäre Arbeitsposition verfahrbar ist, wenn die erste Werkzeugspindel vom ersten Rundtisch wegbewegt ist.

Mit dieser Gestaltung ist es möglich, dass die erste Werkzeugspindel ein Werkstück am zweiten Rundtisch bearbeitet, wenn sich die zweite Werkzeugspindel in einer Parkposition oder Werkzeugwechselposition befindet. Grundsätzlich ist auch eine Konfiguration vorstellbar, bei der lediglich eine einzige Werkzeugspindel am Portal aufgenommen ist, die beide Rundtische anfahren kann. Auf diese Weise erhöht sich die Funktionsvielfalt. Die Werkzeugmaschine eignet sich für ein größeres Einsatzspektrum

Gemäß einer beispielhaften Ausgestaltung können zumindest die erste Werkzeugspindel oder die zweite Werkzeugspindel ausgehend von ihrer primären Arbeitsposition in der sekundären Arbeitsposition in der zweiten Richtung (X-Richtung) bis über die jeweilige Drehachse des in der sekundären Arbeitsposition zugeordneten anderen Rundtisches hinaus gefahren werden. Mit anderen Worten ist es vorstellbar, die erste Werkzeugspindel in eine X-Position zu verfahren, bei der die X-Position der Drehachse des zweiten Rundtisches zwischen der X-Position der Drehachse des ersten Rundtisches und der dann eingenommenen X-Position der ersten Werkzeugspindel liegt. Mit anderen Worten kann die erste Werkzeugspindel bei Bedarf über die X-Position der Drehachse des zweiten Rundtisches hinaus gefahren werden. Bei der zweiten Werkzeugspindel kann es sich umgekehrt verhalten, so dass diese bei Bedarf über die X-Position der Drehachse des ersten Rundtisches hinaus gefahren werden kann. Die jeweils andere Werkzeugspindel weicht dann aus.

Gemäß einer weiteren beispielhaften Ausgestaltung weist der Werkstücktisch zumindest einen Platz zur Aufnahme zumindest einer Palette auf, wobei bei Verwendung zweier Werkzeugspindeln ein erster Platz der ersten Werkzeugspindel und ein zweiter Platz der zweiten Werkzeugspindel zugeordnet ist. Die Palette dient zur Aufnahme zumindest eines Werkstücks, wobei das Werkstück außerhalb der Werkzeugmaschine gespannt werden kann.

Gemäß einer weiteren beispielhaften Ausgestaltung ist für den Werkstückwechsel ein Palettenwechsler vorgesehen, der an einer vom Portal abgewandten Seite mit dem Gestell koppelbar ist. Auf diese Weise erfolgt der Werkstückwechsel nicht durch das Portal hindurch. An der vom Portal abgewandten Seite liegen günstige Bauraumverhältnisse vor, so dass genügend Platz für den Palettenwechsel ist.

Gemäß einer weiteren beispielhaften Ausgestaltung ist der Palettenwechsler mit einer fahrbaren Gestellbasis versehen, welche vom Gestell der Werkzeugmaschine lösbar ist. Demgemäß kann der Palettenwechsler für die Bestückung oder zu anderen Zwecken vom Gestell der Werkzeugmaschine getrennt werden. Es ist grundsätzlich auch vorstellbar, den Palettenwechsler in seinem mit dem Gestell der Werkzeugmaschine gekoppelten Zustand zu bestücken. Dies kann manuell, teilautomatisiert oder vollautomatisiert erfolgen.

Gemäß einer weiteren beispielhaften Ausgestaltung ist der Palettenwechsler zur Aufnahme zweier Paletten von zwei Plätzen des Werkstücktisches und zur Abgabe zweier Paletten an die zwei Plätze des Werkstücktisches ausgebildet, wobei der Palettenwechsler einen um eine vertikale Achse schwenkbaren Umsetzer mit vier Koppelplätzen aufweist, die jeweils mit einer Palette koppelbar sind, um Paletten zwischen dem Werkstücktisch und einer Bestückungsposition am Palettenwechsler auszutauschen. Beispielhaft ist der Umsetzer als Hub-Schwenk-Umsetzer gestaltet.

Auf diese Weise kann der Palettenwechsler in einem Takt beide Paletten des Werkstückträgers tauschen. Die Bewegung erfolgt über den Umsetzer, der stirnseitig an die Paletten ankoppeln kann, um diese anzuheben und um beispielsweise 180° zu verschwenken.

Gemäß einer weiteren beispielhaften Ausgestaltung ist der Werkstücktisch in der dritten Richtung (Y-Richtung) in eine Übergabeposition verfahrbar, wobei in der Übergabeposition eine Übergabe von Paletten zwischen dem Werkstücktisch und dem Palettenwechsler ermöglicht ist, und wobei der Palettenwechsler im an das Gestell angekoppelten Zustand in der dritten Richtung lagefixiert ist. Mit anderen Worten muss weder der Palettenwechsler noch der Umsetzer in der Y-Richtung translatorisch bewegt werden, um Paletten auszutauschen. Der Palettenwechsler koppelt an das Gestell an. Sodann wird die Y-Achse des Werkstückträgers genutzt, um die dort angeordneten Paletten zum Umsetzer des Palettenwechslers zu fahren.

Gemäß einer weiteren beispielhaften Ausgestaltung definiert das Portal eine Bedienerseite der Werkzeugmaschine, wobei die vom Portal abgewandte Seite des Gestells eine Beladeseite definiert. Der Begriff Beladeseite bezieht sich zumindest in beispielhaften Ausgestaltungen auf den Werkstückwechsel. Der Werkzeugwechsel kann über die Bedienerseite erfolgen, durch die zumindest eine Magazinöffnung im Portal hindurch.

Erfindungsgemäß weist das Portal zumindest eine erste Portalausnehmung, durch die der Arbeitsraum zugänglich ist, sowie zwei Magazinöffnungen auf, durch die zumindest zwei Werkzeugmagazine zugänglich sind. Bei Verwendung zweier Magazinanordnungen, die jeweils zwei zueinander versetzte Magazine aufweisen, ist es auch vorstellbar, vier Magazinöffnungen am Portal auszubilden. Es ist jedoch auch vorstellbar, eine der beiden Magazinöffnungen groß genug zu gestalten, so dass sich beide Werkzeugmagazine einer Magazinanordnung zumindest teilweise in diesen hinein erstrecken können.

Gemäß einer weiteren beispielhaften Ausgestaltung weist das Portal ferner zwei Führungsöffnungen auf, durch die eine Stirnseite von Längsführungen für die Bewegung des Werkstücktisches in der dritten Richtung zugänglich ist. Diese Gestaltung vereinfacht die Überwachung des translatorischen Y-Antriebs und entsprechende Servicearbeiten/Reparaturarbeiten. Es versteht sich, dass gemäß weiteren beispielhaften Ausgestaltungen die Führungsöffnungen und die Magazinöffnungen durch eine gemeinsame Öffnung für die Längsführung und entsprechende Magazine gebildet werden können. Die Führungsöffnungen und die Magazinöffnungen erschließen einen Bereich der Werkzeugmaschine, der dem eigentlichen Arbeitsraum benachbart ist. Sofern zwischen dem Arbeitsraum und benachbarten Bereichen Zwischenwände ausgebildet sind, erleichtern separate Öffnungen die Abgrenzung und die jeweilige Zugänglichkeit.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1:: eine perspektivische, vereinfachte rückwärtige Ansicht einer Werkzeugmaschine;
- Fig. 2:: eine rückwärtige, vereinfachte Ansicht der Werkzeugmaschine gemäß Fig. 1;
- Fig. 3:: eine vereinfachte Draufsicht der in den Figuren 1 und 2 veranschaulichten Werkzeugmaschine;
- Fig. 4:: eine perspektivische Ansicht einer Werkzeugmaschine in Anlehnung an Fig. 1, mit einem Palettenwechsler;
- Fig. 5:: eine vereinfachte Draufsicht der Werkzeugmaschine gemäß Fig. 4;
- Fig. 6:: eine rückwärtige, vereinfachte Ansicht einer weiteren Ausführungsform einer Werkzeugmaschine; und
- Fig. 7:: eine weitere Ansicht der Werkzeugmaschine gemäß Fig. 6 in einem alternativen Zustand.

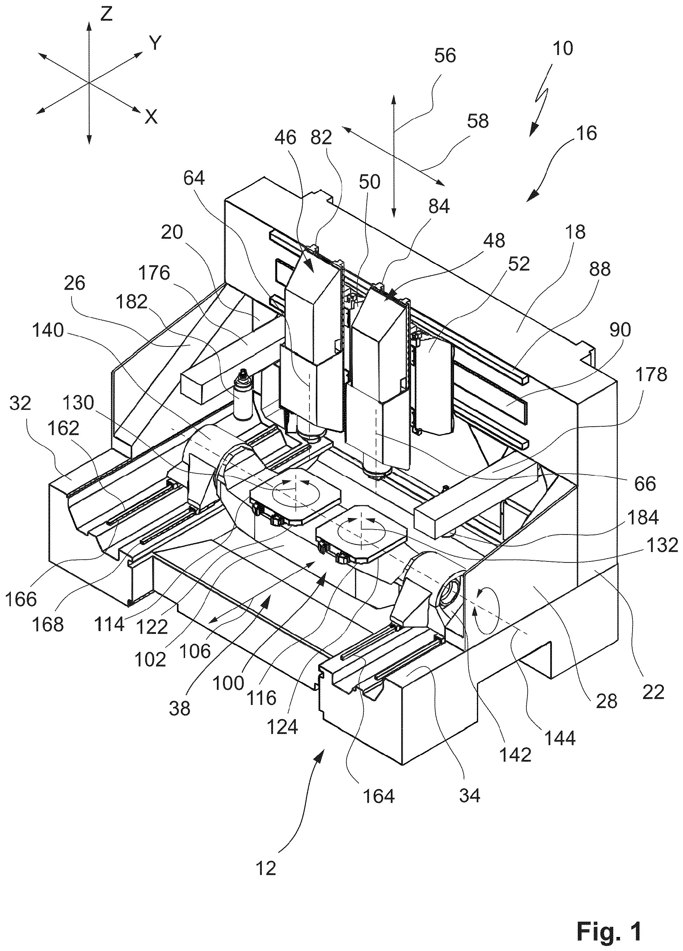

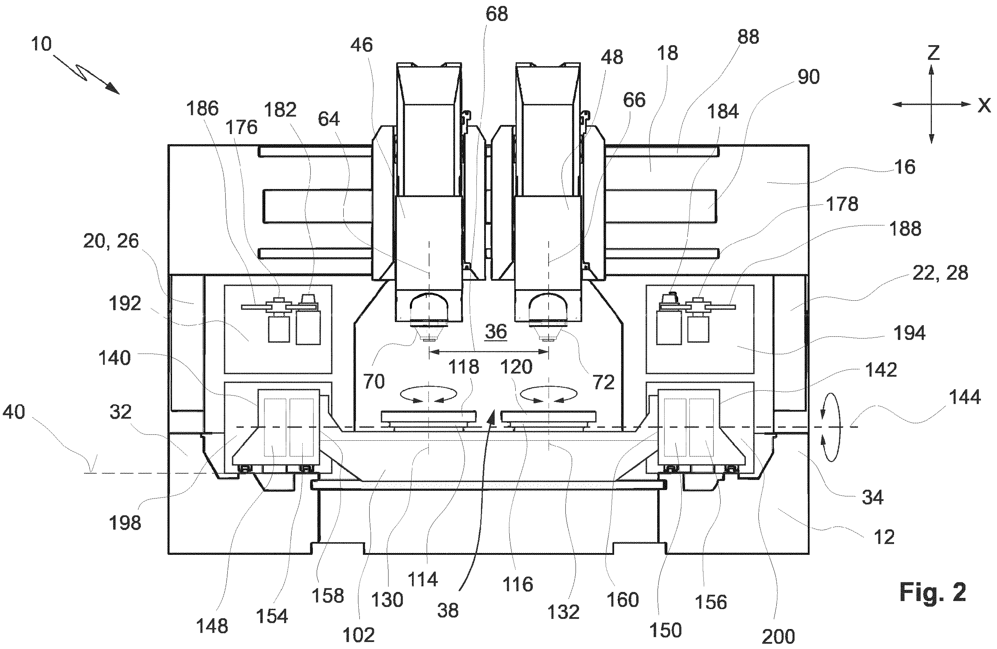

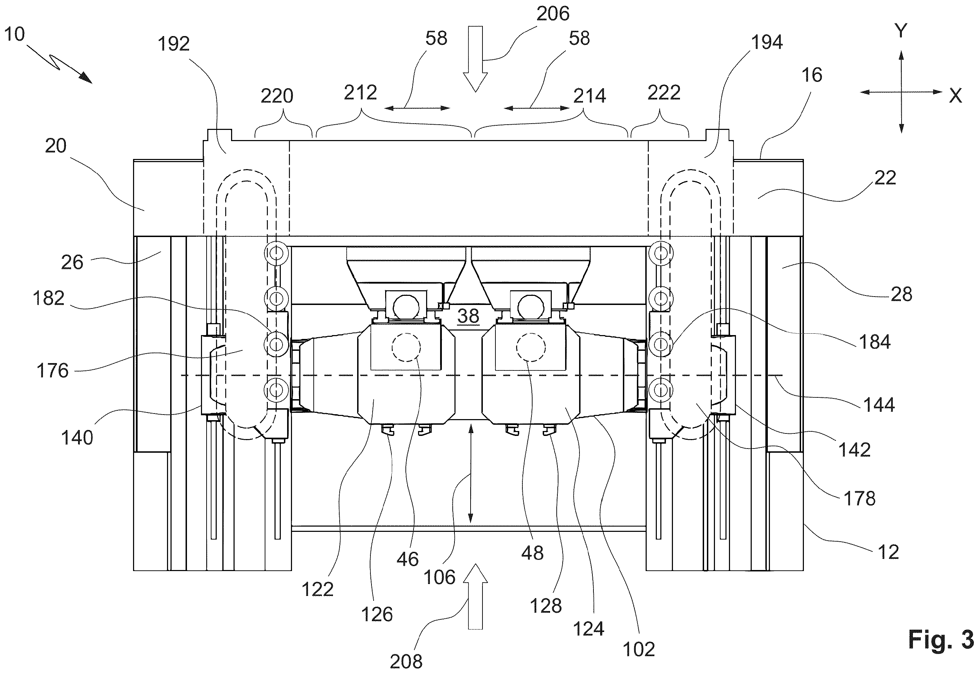

Fig. 1 zeigt in Zusammenschau mit den Figuren 2 und 3 eine beispielhafte Ausgestaltung einer Werkzeugmaschine, die insgesamt mit 10 bezeichnet ist. Die Werkzeugmaschine 10 weist ein Gestell 12 auf, das ein Portal 16 trägt. Das Portal 16 umfasst eine Traverse 18 sowie seitliche Träger 20, 22. Zwischen dem Portal 16 und dem Gestell 12 erstrecken sich Seitenverstrebungen 26, 28. Die Seitenverstrebungen 26, 28 verbinden eine rückwärtige Seite (Spindelseite) des Portals 16 bzw. von dessen Trägern 20, 22 mit erhabenen Seitenprofilen 32, 34 des Gestells. Am Portal 16 ist eine Portalausnehmung 36 ausgebildet, durch die ein Arbeitsraum 38 zugänglich ist. Das Portal 16 begrenzt den Arbeitsraum 38.

In Fig. 2 ist eine mit 40 bezeichnete Führungsebene durch eine gestrichelte Linie angedeutet. Die erhabenen Seitenprofile 32, 34 sind gegenüber der Führungsebene 40 erhöht. Die Seitenprofile 32, 34 versteifen das Gestell 12 bzw. dessen Basis. Die Seitenverstrebungen 26, 28 bewirken eine feste und steife Kopplung zwischen den Seitenprofilen 32, 34 und dem Portal 16.

Das Portal 16 trägt eine erste Werkzeugspindel 46 und eine zweite Werkzeugspindel 48. Demgemäß ist die Werkzeugmaschine 10 zumindest in der in den Figuren 1 bis 3 veranschaulichten Ausgestaltung als Doppelspindelmaschine gestaltet. Die erste Werkzeugspindel 46 ist an einem Schlitten 50 in einer ersten Richtung 56 und über den Schlitten 50 in einer zweiten Richtung 58 verfahrbar. Die zweite Werkzeugspindel 48 ist an einem Schlitten 52 in der ersten Richtung 56 und über den Schlitten 52 in der zweiten Richtung 58 verfahrbar.

In Fig. 1 ist zu Veranschaulichungszwecken ein kartesisches Koordinatensystem X-Y-Z dargestellt. In der veranschaulichten Ausführungsform ist die erste Richtung 56 parallel zur Z-Achse. Ferner ist die zweite Richtung 58 parallel zur X-Achse. Eine weitere, dritte Richtung (Bezugszeichen 106) ist parallel zur Y-Achse. Die Z-Achse beschreibt allgemein eine Vertikale oder Höhenrichtung. Die X-Achse und die Y-Achse beschreiben allgemein zueinander senkrecht orientierte Horizontalachsen. Gemeinsam bilden die X-Achse und die Y-Achse einer Horizontalebene. Die Führungsebene 40 (vergleiche Fig. 2) ist parallel zur Horizontalebene X-Y.

Es versteht sich, dass das Koordinatensystem X-Y-Z und die hier verwendeten Achsenbezeichnungen und Richtungsangaben lediglich beispielhafter Natur sind und primär Veranschaulichungszwecken dienen. Sie sind daher nicht einschränkend zu verstehen. Es versteht sich daher, dass auch andere Koordinatensysteme und Achsenbezeichnungen nutzbar sind, um die Beziehungen zwischen den Komponenten der Werkzeugmaschine 10 zu beschreiben. Der Fachmann kann gedankliche Transformationen vornehmen, um solche Koordinatensysteme ineinander zu überführen. Ferner werden im Rahmen dieser Offenbarung Ordinalzahlen bzw. Aufzählungen (erstes, zweites, etc. Element) primär zur Veranschaulichung und Unterscheidbarkeit verwendet und sind daher nicht einschränkend zu verstehen. Aus den Ordinalzahlen ergibt sich nicht unbedingt eine qualitative oder quantitative Ordnung.

Die erste Werkzeugspindel 46 weist eine Spindelachse 64 sowie eine um diese rotatorisch antreibbare Werkzeugaufnahme 70 auf, vergleiche auch Fig. 2. Die zweite Werkzeugspindel 48 weist eine Spindelachse 66 sowie eine um diese rotatorisch antreibbare Werkzeugaufnahme 72 auf. Die Spindelachsen 64, 66 ergeben einen Spindelabstand 68 in der X-Richtung (zweite Richtung). In beispielhaften Ausführungsformen ist der Spindelabstand 68 während der Bearbeitung konstant, so dass die beiden Werkzeugspindeln 46, 48 synchron verfahrbar sind. Dies umfasst in beispielhaften Ausgestaltungen auch eine synchrone Bewegung in der Z-Richtung (erste Richtung). Auf diese Weise können gleichzeitig zwei Werkstücke in identischer oder nahezu identischer Weise bearbeitet werden.

Zwischen der Werkzeugspindel 46 und dem Schlitten 50 erstreckt sich eine Z-Führung 82. Zwischen der Werkzeugspindel 48 und dem Schlitten 52 erstreckt sich eine Z-Führung 84. Sowohl der Schlitten 50 als auch der Schlitten 52 ist an einer Führung 88 am Portal 16 aufgenommen, die sich in der X-Richtung (zweite Richtung) erstreckt. Ferner ist in Fig. 1 und Fig. 2 mit 90 ein Primärteil eines Lineardirektantriebs angedeutet. In der beispielhaften Ausführungsform wirkt das Primärteil 90 mit entsprechenden Sekundärteilen zusammen, von denen je eines am Schlitten 50 und eines am Schlitten 52 angeordnet ist. Auf diese Weise können die Werkzeugspindeln 46, 48 gemeinsam und unabhängig voneinander in der zweiten Richtung (X-Richtung) entlang der Führung 88 am Portal 16 verfahren werden.

Die Werkzeugmaschine 10 weist ferner einen Werkstücktisch 100 auf, der zumindest abschnittsweise, vorzugsweise weitgehend oder vollständig im Arbeitsraum 38 angeordnet ist. Der Werkstücktisch 100 ist in der beispielhaften Ausgestaltung gemäß den Figuren 1 bis 3 als Wiege 102 gestaltet. Der Werkstücktisch 100 ist in einer dritten Richtung 106 (Y-Richtung) translatorisch verfahrbar. Der Werkstücktisch 100 ist dazu ausgebildet, Werkstücke zu tragen. Zu diesem Zweck weist der Werkstücktisch 100 beispielhaft Plätze 114, 116 auf, welche jeweils eine Werkstückaufnahme ausbilden. Beispielsweise umfassen die Plätze 114, 116 jeweils einen drehbaren Rundtisch 118, 120 zur direkten Aufnahme von Werkstücken oder zur Aufnahme einer Palette.

Beispielhaft tragen die Rundtische 118, 120 jeweils eine Palette 122, 124. Die Paletten 122, 124 fungieren als Werkstückträger. Die Paletten 122, 124 können zumindest ein Werkstück tragen, welches auf der Palette befestigt ist. Das Beladen mit Werkstücken kann eine Handhabung der Paletten 122, 124 umfassen, also ein Bestücken der Plätze 114, 116 mit Paletten 122, 124, die ihrerseits mit Werkstücken bestückt sind. Es versteht sich, dass die Werkzeugmaschine 10 grundsätzlich auch ohne solche Paletten betreibbar ist. Werkstücke können direkt auf den Rundtischen 118, 120 aufgenommen sein. Gleichwohl können die Paletten 122, 124 einen automatisierten Werkstückwechsel vereinfachen. Wenn die Paletten 122, 124 außerhalb des Arbeitsraums 38 mit den Werkstücken bestückt werden, können sich Nebenzeiten reduzieren. Die Paletten 122, 124 weisen Koppelstücke 126, 128 auf, vergleiche Fig. 3. Über die Koppelstücke 126, 128 kann ein Palettenwechsler an die Paletten 122, 124 zu deren Handhabung angreifen.

Die Rundtische 118, 120 sind um Achsen 130, 132 schwenkbar bzw. drehbar. Die Achsen 130, 132 werden auch als C-Achsen bezeichnet. In der in Fig. 1 gezeigten Orientierung des Werkstücktisches 100 (der Wiege 102) sind die Achsen 130, 132 parallel zur Z-Achse ausgerichtet. Diese Ausrichtung ist jedoch abhängig von der aktuellen Schwenkorientierung des Werkstücktisches 100 bezüglich der X-Achse. Der Werkstücktisch 100 ist an einem ersten Schlitten 140 und einem zweiten Schlitten 142 aufgenommen. Die Schlitten 140, 142 definieren ferner eine Schwenkachse 144, welche auch als A-Achse bezeichnet wird. Die A-Achse ist parallel zur X-Achse. Der Werkstücktisch 100 und folglich die Rundtische 118, 120 sind um die A-Achse schwenkbar. Der Abstand zwischen den beiden C-Achsen 130, 132 entspricht im Ausführungsbeispiel dem gewählten Spindelabstand 68 zwischen den beiden Spindelachsen 64, 66, zumindest in einem beispielhaften Betriebsmodus für die simultane Bearbeitung zweier Werkstücke.

In Fig. 2 veranschaulichen Blöcke 148, 150 zwei translatorische Antriebe für den Werkstücktisch 100 zur Bewegung in der dritten Richtung 106 (Y-Richtung). Beispielhaft beherbergen die Schlitten 140, 142 die Antriebe 148, 150. Dies ist beispielsweise bei einem Direktantrieb oder Lineardirektantrieb denkbar. Es ist jedoch auch vorstellbar, die Schlitten 140, 142 über Gewindetriebe (Spindeltriebe) oder dergleichen in der dritten Richtung 106 verfahrbar zu gestalten. Wesentlich ist, dass jedem der beiden Schlitten 140, 142 ein eigener, separater Antrieb 148, 150 zugeordnet ist. Demgemäß ist der Werkstücktisch 100 nach dem Gantry-Prinzip in der Y-Richtung verfahrbar. Über eine geeignete Steuerung der beiden Antriebe 148, 150 können beide Schlitten 140, 142 hochgenau und synchron verfahren werden. Dies hat den Vorteil, dass der als Wiege 102 ausgebildete Werkstücktisch 100 trotz der beträchtlichen Erstreckung in der X-Richtung präzise in der Y-Richtung verfahrbar ist, wobei ein gewünschtes Maß für die Parallelität zwischen der A-Achse 144 und der X-Richtung gewahrt wird. Ferner lassen sich zumindest in beispielhaften Ausgestaltungen mit den beiden Antrieben 148, 150 hohe Beschleunigungen und Verfahrgeschwindigkeiten erzielen.

Die Schlitten 140, 142 beherbergen ferner jeweils einen Schwenkantrieb 154, 156 sowie ein Schwenklager 158, 160 für die Schwenkbewegung des als Wiege 102 gestalteten Werkstücktisches 100 um die Schwenkachse 144. Somit stehen auch für diesen Freiheitsgrad zwei grundsätzlich unabhängige Antriebe bereit, die synchron gesteuert werden. Auch diese Gestaltung trägt dazu bei, dass trotz der beträchtlichen X-Erstreckung des Werkstücktisches 100 zwischen den beiden Schlitten 140, 142 eine hochgenaue Bewegung und folglich eine präzise Bearbeitung möglich ist. Die beiden Schwenkantriebe 154, 156 erlauben hohe Winkelbeschleunigungen und Winkelgeschwindigkeiten, zumindest in beispielhaften Ausgestaltungen.

Die Schlitten 140, 142 sind jeweils an einer sich in der Y-Richtung erstreckenden Längsführung 162, 164 aufgenommen. Die Längsführungen 162, 164 umfassen Führungsschienen 166, 168. Das Gestell 12 trägt die Längsführungen 162, 164. Die Längsführungen 162, 164 sind innerhalb der Seitenprofile 32, 34 des Gestells angeordnet. Die Längsführungen 162, 164 sind den Seitenprofilen 32, 34 benachbart.

In Fig. 1 veranschaulichen zwei mit 176, 178 bezeichnete Blöcke Werkzeugmagazine zur Bereitstellung von Bearbeitungswerkzeugen. Die Werkzeugmagazine 176, 178 sind in den Figuren 2 und 3 anhand schematischer Darstellungen näher detailliert. Das Werkzeugmagazin 176 ist der ersten Werkzeugspindel 46 zugeordnet. Das Werkzeugmagazin 178 ist der zweiten Werkzeugspindel 48 zugeordnet. Das Werkzeugmagazin 176 trägt Werkzeugplätze 182, 186 (Fig. 2). Das Werkzeugmagazin 178 trägt Werkzeugplätze 184, 188. Die Plätze 182, 184, 186, 188 können Leerplätze zur Aufnahme eines Werkzeugs von den Werkzeugspindeln 46, 48 oder mit Werkzeugen bestückte Plätze zur Abgabe an die Werkzeugaufnahmen 70, 72 der Werkzeugspindeln 46, 48 sein.

Die Werkzeugmagazine 176, 178 sind beispielhaft als Kettenmagazine gestaltet, insbesondere als umlaufende Kettenmagazine. Demgemäß sind geeignete Antriebe für die Werkzeugmagazine 176, 178 vorgesehen. Die Werkzeugmagazine 176, 178 erstrecken sich zumindest teilweise in Magazinöffnungen 192, 194 in das Portal 16 hinein, vergleiche auch Fig. 2 und Fig. 3. Auf diese Weise können die Werkzeugmagazine 176, 178 ausgehend von der vom Arbeitsraum 38 abgewandten Seite des Portals 16 bestückt werden. Die Werkzeugmagazine 176, 178 können sich in beispielhaften Ausgestaltungen durch die Magazinöffnungen 192, 194 hindurch nach außen erstrecken.

Gemäß einer weiteren beispielhaften Ausgestaltung weist das Portal 16 ferner Führungsöffnungen 198, 200 auf, vergleiche wiederum Fig. 2. In der dort gezeigten Ausführungsform sind die Führungsöffnungen 198, 200 aus Sicht des Gestells 12 unterhalb der Magazinöffnungen 192, 194 angeordnet. Durch die Führungsöffnungen 198, 200 ist eine Stirnseite der Längsführungen 162, 164 bzw. von deren Führungsschienen 166, 168 zugänglich. Auf diese Weise lässt sich dieser Bereich einschließlich der Schlitten 140, 142 überwachen, ferner werden Wartungsarbeiten, Inspektionsarbeiten und dergleichen vereinfacht.

Der Arbeitsraum 38 ist über die mittige Portalausnehmung 36 zugänglich und einsehbar. Es ist jedoch zumindest in beispielhaften Ausgestaltungen nicht vorgesehen, einen Werkstückwechsel durch die Portalausnehmung 36 hindurch zu bewerkstelligen. Stattdessen kann der Werkstückwechsel über die gegenüberliegende Seite des Gestells 12 erfolgen. Demgemäß kann die durch das Portal 16 gebildete Seite der Werkzeugmaschine 10 als Bedienerseite 206 und die hiervon abgewandte Seite des Gestells 12 als Beladeseite 208 bezeichnet werden, zumindest in dem in Fig. 3 gezeigten Ausführungsbeispiel.

Zumindest in einer beispielhaften Ausführungsform erfolgt der Werkzeugwechsel zwischen den Werkzeugspindeln 46, 48 und den Werkzeugmagazinen 176, 178 ohne zusätzliche Handhabungstechnik in Form von Greifern, Umsetzern, Robotern und ähnlichen Mechanismen. Stattdessen sind die Werkzeugspindeln 46, 48 dazu ausgebildet, einen Werkzeugwechsel im Pick-Up-Verfahren durchzuführen. Zu diesem Zweck sind die Werkzeugmagazine 176, 178 derart gestaltet, dass eine vertikale Zugänglichkeit für die Werkzeugspindeln 46, 48 gegeben ist.

Die Werkzeugspindeln 46, 48 sind in der dritten Richtung (Y-Richtung) nicht verfahrbar. Die beispielhaft als Kettenmagazin ausgestalteten Werkzeugmagazin 176, 178 sind jedoch derart antreibbar, dass ein aktuell gewünschter Werkzeugplatz 182, 184 in der erforderlichen Y-Position bereitgestellt werden kann. Die Werkzeugspindeln 46, 48 sind jedoch in der ersten Richtung (vertikal) und der zweiten Richtung (horizontal) verfahrbar. Auf diese Weise kann beispielsweise die erste Werkzeugspindel 46 aus ihrem primären Arbeitsbereich 212 (vergleiche Fig. 3) in der X-Richtung in einen dem Werkzeugmagazin 176 zugeordneten Werkzeugwechselbereich 220 einfahren und dort eine Werkzeugwechselposition einnehmen. Gleichermaßen kann die zweite Werkzeugspindel 48 aus ihrem primären Arbeitsbereich 214 in der X-Richtung in einen dem Werkzeugmagazin 178 zugeordneten Werkzeugwechselbereich 222 einfahren und dort eine Werkzeugwechselposition einnehmen. In der Werkzeugwechselposition können die Werkzeugspindeln 46, 48 in der Z-Richtung vertikal verfahren werden, um Werkzeuge von den Werkzeugplätzen 182, 184 zu übernehmen bzw. an diese abzugeben.

Für den Werkzeugwechsel verlassen die beiden Werkzeugspindeln 46, 48 ihre "Zwangskopplung" mit konstantem Spindelabstand 68. In diesem Zusammenhang ist es von Vorteil, wenn die beiden Werkzeugspindeln separat und unabhängig voneinander verfahrbar sind. Wenn gewünschte Werkzeuge an den Werkzeugaufnahmen 70, 72 aufgenommen sind, kann wiederum bedarfsweise eine synchrone Bearbeitung im steuerungstechnisch gekoppelten Zustand mit konstantem Spindelabstand 68 erfolgen.

Insbesondere die Figuren 2 und 3 veranschaulichen, dass die Werkzeugmagazine 176, 178 oberhalb (d. h., ähnliche X-Position, ähnliche Y-Position, abweichende Z-Position) der Längsführungen 162, 164 des Werkstücktisches 100 angeordnet sind. Es ergibt sich eine günstige Gestaltung des Arbeitsraums 38, da dieser nicht durch die Werkzeugmagazine 176, 178 und auch nicht durch die Längsführungen 162, 164 bzw. die Schlitten 140, 142 verbaut ist. Vorzugsweise erfolgt die Übergabe der Werkzeuge beim Werkzeugwechsel außerhalb des Arbeitsraums 38 im hiervon abgegrenzten Werkzeugwechselbereich 220, 222. Es ist grundsätzlich vorstellbar, Trennwände zwischen dem Arbeitsraum 38 und dem Werkzeugwechselbereich 220, 222 vorzusehen.

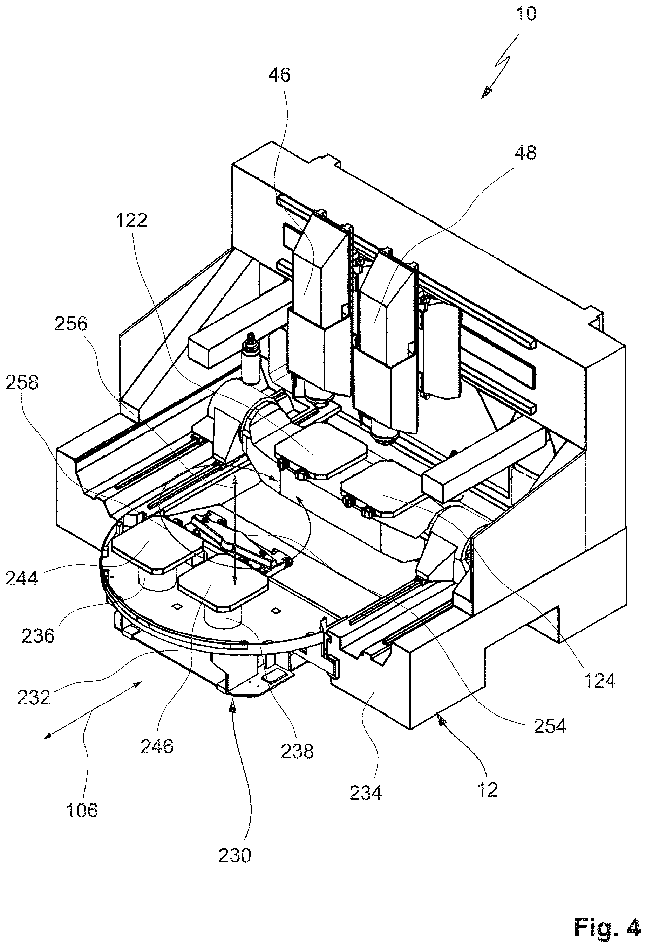

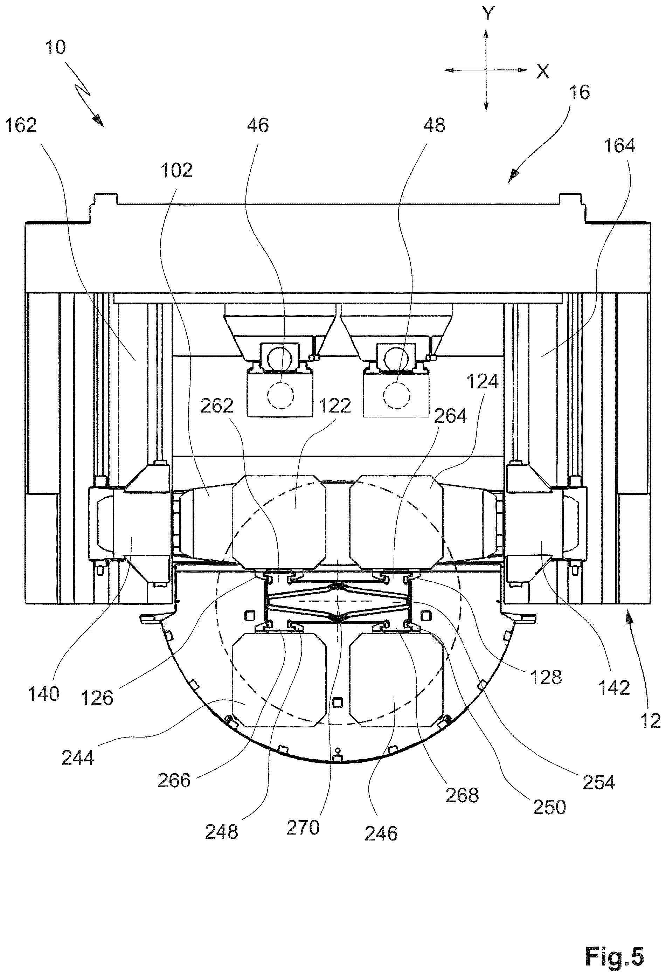

Mit Bezugnahme auf Fig. 4 und Fig. 5 wird auf Basis der bereits anhand der Figuren 1 bis 3 veranschaulichten Gestaltung der Werkzeugmaschine 10 eine beispielhafte Ausführungsform mit automatisiertem Werkstückwechsel veranschaulicht. Für den Werkstückwechsel ist ein Palettenwechsler 230 vorgesehen, der an der Beladeseite 208 (vergleiche auch Fig. 3) des Gestells 12 an dieses angekoppelt bzw. herangefahren werden kann.

Der Palettenwechsler 230 weist eine Gestellbasis 232 auf, die an eine Stirnseite 234 des Gestells 12 in der dritten Richtung (Y-Richtung) herangefahren werden kann. Demgemäß kann die Gestellbasis 232 ein Fahrwerk oder Führungseinrichtungen für die Y-Bewegung umfassen. Der Palettenwechsler 230 weist beispielhaft zwei Plätze 236, 238 auf, die Paletten 244, 246 zum Palettentausch tragen. Die Paletten 244, 246 können demgemäß mit Werkstücken bestückt sein, die noch zu bearbeiten sind. Die Paletten 244, 246 entsprechen grundsätzlich den bereits zuvor veranschaulichten Paletten 122, 124 am Werkstücktisch 100. Die Paletten 122, 124 sowie die Paletten 244, 246 sind zum Werkstückwechsel austauschbar. Die Paletten 122, 124, 244, 246 weisen jeweils an einer ihrer Stirnseiten ein Koppelstück 126, 128, 248, 250 auf, an das der Palettenwechsler 230 angreifen kann.

Für die eigentliche Wechselbewegung (Austausch der Paletten 122, 124 mit den Paletten 244, 246) ist es nicht erforderlich, die Gestellbasis 232 des Palettenwechslers 230 in der dritten Richtung (Y-Richtung) relativ zum Gestell 12 der Werkzeugmaschine 10 zu verfahren. Stattdessen kann der Werkstücktisch 100 in der Y-Richtung in eine Werkstückwechselposition fahren, in der der Werkstücktisch 100 dem Palettenwechsler 230 benachbart ist, vergleiche Fig. 4. Für den Austausch weist der Palettenwechsler 230 einen Umsetzer 254 auf, der beispielhaft eine kombinierte Hub- und Schwenkbewegung ausführen kann. In Fig. 4 veranschaulicht der Doppelpfeil 256 die Hubbewegung (in Z-Richtung). Hingegen veranschaulicht der gekrümmte Doppelpfeil 258 die Schwenkbewegung (um die Z-Achse).

Der Umsetzer 254 weist insgesamt vier Koppelplätze 262, 264, 266, 268 auf, so dass insgesamt vier Paletten 122, 124, 244, 246 über ihre Koppelstücke 126, 128, 248, 250 vom Umsetzer 254 erfasst und umgesetzt werden können. Beispielhaft werden die Paletten 122, 124, 244, 246 durch den Umsetzer 254 angehoben (Z-Bewegung) und um 180° um die Schwenkachse 270 (vergleiche Fig. 5) des Umsetzers 254 rotiert. Auf diese Weise erfolgt ein Austausch der Paletten 122, 124 durch die Paletten 244, 246.

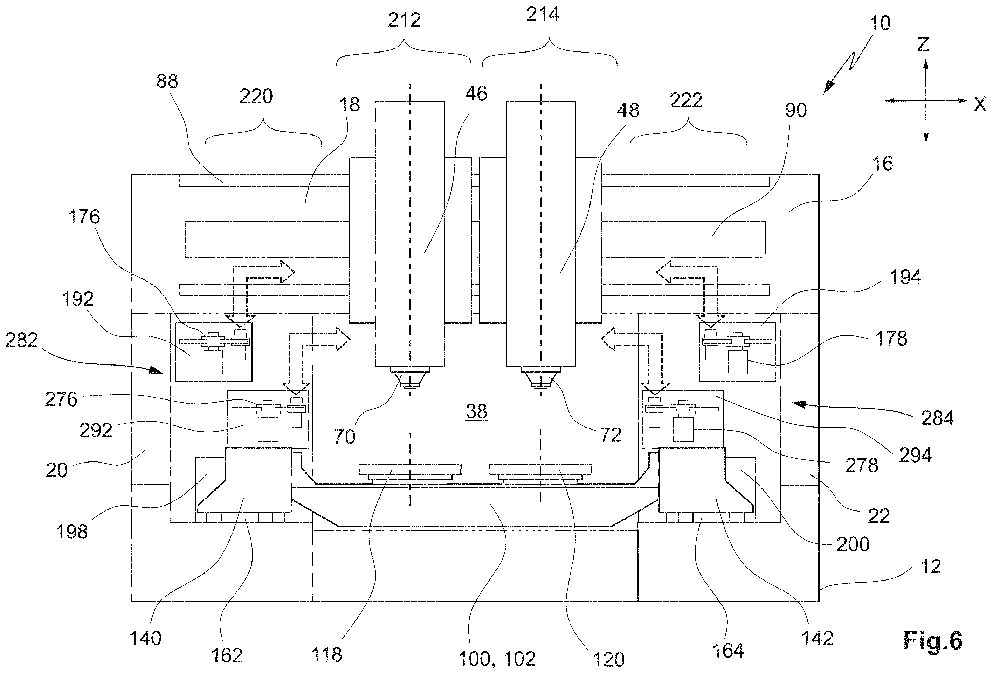

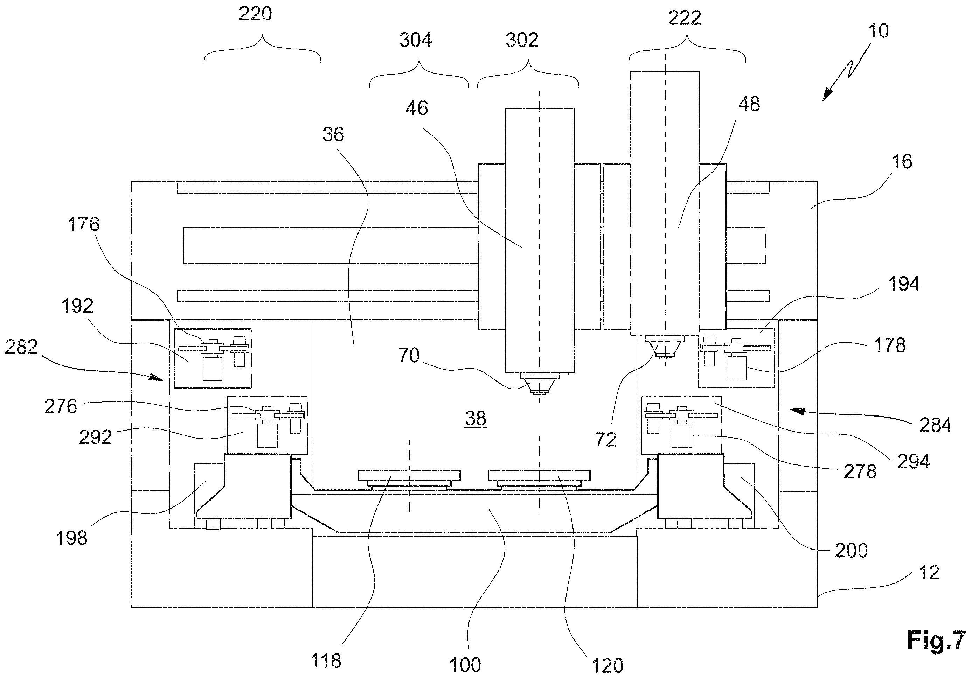

Mit Bezugnahme auf Fig. 6 und Fig. 7 wird eine weitere Ausgestaltung einer Werkzeugmaschine 10 veranschaulicht, die der Ausgestaltung gemäß den Figuren 1 bis 3 weitgehend entspricht. Eine Abwandlung ergibt sich bei der Gestaltung der Magazine für den Werkzeugwechsel.

In grundsätzlich zuvor schon beschriebener Weise ist der ersten Spindel 46 ein erstes Werkzeugmagazin 176 und der zweiten Spindel 48 ein zweites Werkzeugmagazin 178 zugeordnet. Die Werkzeugmagazine 176, 178 sind jedoch jeweils einer Magazinanordnung 282, 284 zugeordnet. Die Magazinanordnung 282 umfasst neben dem Werkzeugmagazin 176 ein weiteres Werkzeugmagazin 276. Die Magazinanordnung 284 umfasst neben dem Werkzeugmagazin 178 ein weiteres Werkzeugmagazin 278. Ähnlich wie die Werkzeugmagazine 176, 178 weisen die Werkzeugmagazine 276, 278 Werkzeugplätze zur Bereitstellung oder zur Aufnahme von Werkzeugen auf.

Die Werkzeugmagazine 176, 178, 276, 278 sind derart gestaltet, dass die erste Werkzeugspindel 46 sowohl das Werkzeugmagazin 176 als auch das Werkzeugmagazin 276 anfahren kann, um dort im Pick-Up-Verfahren Werkzeuge zu wechseln. Gleichermaßen kann die zweite Werkzeugspindel sowohl das Werkzeugmagazin 178 als auch das Werkzeugmagazin 278 anfahren, um dort im Pick-Up-Verfahren Werkzeuge zu wechseln.

Da die Werkzeugspindeln 46, 48 in der dritten Richtung (Y-Richtung) nicht verfahrbar sind, sind die beiden Werkzeugmagazine 176, 276 der Magazinanordnung 282 sowie die beiden Werkzeugmagazine 178, 278 der Magazinanordnung 284 jeweils in der X-Richtung (zweite Richtung) zueinander versetzt. Der Versatz ist an die Abmessung der Werkzeugspindeln 46, 48 angepasst, so dass Werkzeugplätze der Werkzeugmagazine 176, 178, 276, 278 für die jeweils zugeordnete Werkzeugspindel 46, 48 vertikal (in der Z-Richtung) zugänglich sind. Das aus Sicht des Gestells 12 jeweils untere Werkzeugmagazin 276, 278 ist gegenüber dem jeweils oberen Werkzeugmagazin 176, 178 in Richtung auf den Arbeitsraum leicht versetzt.

Ferner weist die anhand der Figuren 6 und 7 veranschaulichte Ausgestaltung neben den zuvor schon beschriebenen Magazinöffnungen 192, 194 im Portal 36 für die Werkzeugmagazine 176, 178 weitere Magazinöffnungen 292, 294 auf, die eine Zugänglichkeit der Werkzeugmagazine 276, 278 von der Bedienerseite 206 (Fig. 3) durch das Portal 16 hindurch ermöglichen. Es versteht sich, dass die Magazinöffnungen 192, 292 sowie die Magazinöffnungen 194, 294 grundsätzlich auch kombiniert werden können und somit jeweils auch eine gemeinsame Magazinöffnung für beide Magazine der jeweiligen Magazinanordnung 282, 284 bilden. Ferner zeigen die Figuren 6 und 7 auch die zuvor schon beschriebenen Führungsöffnungen 198, 200 beim Portal 16. Insgesamt ist daher von der Bedienerseite 206 aus eine gute Zugänglichkeit der Werkzeugmagazine 176, 178, 276, 278 und der Schlitten 140, 142 bzw. der Längsführungen 162, 164 gegeben.

Auf diese Weise muss durch die Portalausnehmung 36 hindurch kein Werkzeugwechsel erfolgen. Demgemäß kann der Werkzeugwechselbereich 220, 222 vom Arbeitsraum 38 durch Wände oder dergleichen getrennt werden. Die Werkzeugspindeln 46, 48 sind als Pick-Up-Spindeln gestaltet und können solche Wände umfahren oder anderweitig überwinden.

Fig. 7 veranschaulicht in Zusammenschau mit Fig. 6 eine weitere beispielhafte Funktionalität der Werkzeugmaschine 10. Grundsätzlich können auch die übrigen Gestaltung gemäß den Figuren 1 bis 5 diese Funktion umfassen.

Fig. 6 zeigt einen Normalbetriebsmodus, bei dem die erste Werkzeugspindel 46 in ihrem primären Arbeitsbereich 212 angeordnet und folglich dem ersten Rundtisch 118 zugeordnet ist, um dort Werkstücke zu bearbeiten. Gleichermaßen ist die zweite Werkzeugspindel 48 in ihrem primären Arbeitsbereich 214 angeordnet und folglich dem zweiten Rundtisch 120 zugeordnet, um dort Werkstücke zu bearbeiten.

Ausgehend von diesem Normalbetriebsmodus veranschaulicht Fig. 7 einen Betriebsmodus, in dem eine der beiden Werkzeugspindeln "über Kreuz" betreibbar ist. Beispielhaft ist in Fig. 7 die zweite Werkzeugspindel 48 im Werkzeugwechselbereich 222 angeordnet. Dies kann grundsätzlich auch eine Parkstellung oder Servicestellung betreffen.

Nun ist an der Traverse 18 des Portals 16 genügend Platz in der zweiten Richtung (X-Richtung), so dass nunmehr die erste Werkzeugspindel 46 ihren angestammten primären Arbeitsbereich 212 (vergleiche Fig. 6) verlassen kann. In Fig. 7 befindet sich die erste Werkzeugspindel 46 in einem sekundären Arbeitsbereich 302, in dem die erste Werkzeugspindel 46 dem zweiten Rundtisch 120 zugeordnet ist, um dort Werkstücke zu bearbeiten. Es versteht sich, dass nicht gleichzeitig die zweite Werkzeugspindel 48 in ihrem sekundären Arbeitsbereich 304 mit Zuordnung zum ersten Rundtisch 118 angeordnet sein kann. Dies wäre jedoch dann möglich, wenn sich die erste Werkzeugspindel 46 im Werkzeugwechselbereich 220 befindet.

## Patentansprüche

1. Werkzeugmaschine mit einem Gestell (12), das ein feststehendes Portal (16) zur Aufnahme zumindest einer Werkzeugspindel (46, 48) trägt, wobei das Portal (16) eine Portalausnehmung (36) aufweist, durch die ein Arbeitsraum (38) zugänglich ist, wobei die oder jede Werkzeugspindel (46, 48) am Portal (16) jeweils in einer ersten Richtung (Z) vertikal und einer zur ersten Richtung (Z) orthogonalen zweiten Richtung (X) verfahrbar ist, und mit einem Werkstücktisch (100) mit zumindest einem Platz (114, 116) zur Werkstückaufnahme, wobei der Werkstücktisch (100) in einer zur ersten Richtung (Z) und zweiten Richtung (X) orthogonalen dritten Richtung (Y) translatorisch verfahrbar ist, wobei der oder jeder Werkzeugspindel (46, 48) zumindest ein Werkzeugmagazin (176, 178) zugeordnet ist, und wobei der Werkzeugwechsel zwischen der oder jeder Werkzeugspindel (46, 48) und dem zumindest einen Werkzeugmagazin (176, 178) im Pick-Up-Verfahren erfolgt, **dadurch gekennzeichnet, dass**
das Portal (16) zwei Magazinöffnungen (192, 194) aufweist, durch die zumindest zwei Werkzeugmagazine (176, 178) zugänglich sind, umfassend ein erstes Werkzeugmagazin (176) und ein zweites Werkzeugmagazin (178),
Werkzeuge zum Werkzeugwechsel durch die zwei zusätzlich zu und separat von der Portalausnehmung (36) im Portal (16) vorgesehenen Magazinöffnungen (192, 194) zuführbar sind, und
das erste Werkzeugmagazin (176) oberhalb einer ersten Längsführung (162) und das zweite Werkzeugmagazin (178) oberhalb einer zweiten Längsführung (164) für den Werkstücktisch (100) angeordnet ist.

2. Werkzeugmaschine nach Anspruch 1, **dadurch gekennzeichnet, dass** der Werkstücktisch (100) um eine zur zweiten Richtung (X) parallele Achse (A) schwenkbar ist, wobei sowohl für die translatorische Bewegung als auch die Schwenkbewegung des Werkstücktisches (100) jeweils zwei voneinander beabstandete, gemeinsam angesteuerte Antriebe (148, 150; 154, 156) vorgesehen sind, und wobei vorzugsweise die Antriebe (148, 150) für die translatorische Bewegung des Werkstücktisches (100) und/oder die Antriebe (154, 156) für die Schwenkbewegung des Werkstücktisches (100) synchron angesteuert werden.

3. Werkzeugmaschine nach Anspruch 1 oder 2, **dadurch gekennzeichnet, dass** am Portal (16) eine erste Werkzeugspindel (46) und eine zweite Werkzeugspindel (48) angeordnet ist, und dass der Werkstücktisch (100) einen ersten Werkstückaufnahmeplatz (114), der der ersten Werkzeugspindel (46) zugeordnet ist, und einen zweiten Werkstückaufnahmeplatz (116) aufweist, der der zweiten Werkzeugspindel (48) zugeordnet ist, wobei die erste Werkzeugspindel (46) und die zweite Werkzeugspindel (48) vorzugsweise gemeinsam und synchron in der zweiten Richtung (X) verfahrbar sind, und wobei ein Spindelabstand (68) an einen Abstand zwischen dem ersten Werkstückaufnahmeplatz (114) und dem zweiten Werkstückaufnahmeplatz (116) angepasst ist.

4. Werkzeugmaschine nach einem der vorhergehenden Ansprüche, **dadurch gekennzeichnet, dass** sich die zumindest zwei Werkzeugmagazine (176, 178) zumindest abschnittsweise in die Magazinöffnungen (192, 194) im Portal (16) hinein erstreckt, wobei die zumindest zwei Werkzeugmagazine (176, 178) vorzugsweise als Kettenmagazin gestaltet sind.

5. Werkzeugmaschine nach einem der vorhergehenden Ansprüche, **dadurch gekennzeichnet, dass** sich die zumindest zwei Werkzeugmagazine (176, 178) in einem Werkzeugwechselbereich (220, 222) außerhalb des Arbeitsraums befinden, und dass die zumindest eine Werkzeugspindel (46, 48) zwischen einer Arbeitsposition im Arbeitsraum (38) und einer Werkzeugwechselposition im Werkzeugwechselbereich (220, 222) verfahrbar ist.

6. Werkzeugmaschine nach Anspruch 5, **dadurch gekennzeichnet, dass** ein erstes Werkzeugmagazin (176) in einem ersten Werkzeugwechselbereich (220) und ein zweites Werkzeugmagazin (178) in einem zweiten Werkzeugwechselbereich (222) angeordnet ist, und dass der Arbeitsraum (38) zwischen dem ersten Werkzeugwechselbereich (220) und dem zweiten Werkzeugwechselbereich (222) angeordnet ist, und wobei vorzugsweise bei Verwendung einer ersten Werkzeugspindel (46) und einer zweiten Werkzeugspindel (48) die erste Werkzeugspindel (46) und die zweite Werkzeugspindel (48) zum Werkzeugwechsel unabhängig voneinander in der zweiten Richtung (X) verfahrbar sind, wobei die erste Werkzeugspindel (46) zwischen dem Arbeitsraum (38) und dem ersten Werkzeugwechselbereich (220) verfahrbar ist, und wobei die zweite Werkzeugspindel (48) zwischen dem Arbeitsraum (38) und dem zweiten Werkzeugwechselbereich (222) verfahrbar ist.

7. Werkzeugmaschine nach Anspruch 5 oder 6, **dadurch gekennzeichnet, dass** die oder jede Werkzeugspindel (46, 48) im Werkzeugwechselbereich (220, 222) vertikal verfahrbar ist, um ein Bearbeitungswerkzeug zu wechseln, und dass zumindest ein Werkzeugplatz (182, 184) zumindest eines Werkzeugmagazins (176, 178) der zumindest zwei Werkzeugmagazine (176, 178) für die zugeordnete Werkzeugspindel (46, 48) von oben vertikal zugänglich ist.

8. Werkzeugmaschine nach einem der vorhergehenden Ansprüche, **dadurch gekennzeichnet, dass** zumindest ein Werkzeugmagazin (176, 178) der zumindest zwei Werkzeugmagazine (176, 178) gemeinsam mit einem weiteren Werkzeugmagazin (276, 278), das im gleichen Werkzeugwechselbereich (220, 222) angeordnet ist, eine Magazinanordnung (282, 284) mit zwei Magazinen (176, 276; 178, 278) bildet, die derart zueinander versetzt sind, dass jedes der beiden Magazine (176, 276; 178, 278) der Magazinanordnung (282, 284) für die zugeordnete Werkzeugspindel (46, 48) zugänglich ist, wobei die Magazinanordnung (282, 284), bezogen auf den Arbeitsraum (38), vorzugsweise ein oberes Magazin (176, 178) und ein unteres Magazin (276, 278) aufweist, und wobei das untere Magazin (176, 178) vom oberen Magazin (276, 278) in Richtung auf den Arbeitsraum (38) versetzt ist.

9. Werkzeugmaschine nach einem der vorhergehenden Ansprüche, sofern direkt oder indirekt auf Anspruch 2 rückbezogen, **dadurch gekennzeichnet, dass** der Werkstücktisch (100) an einem ersten Schwenklager (158) und einem hiervon beabstandeten zweiten Schwenklager (160) aufgenommen ist, und sich als Wiege (102) dazwischen erstreckt, und dass der erste Antrieb (154) dem ersten Schwenklager (158) als erster Schwenkantrieb und der zweite Antrieb (156) dem zweiten Schwenklager (160) als zweiter Schwenkantrieb zugeordnet ist.

10. Werkzeugmaschine nach einem der vorhergehenden Ansprüche, sofern direkt oder indirekt auf Anspruch 2 rückbezogen, **dadurch gekennzeichnet, dass** der Werkstücktisch (100) an einer ersten Längsführung (162) und einer hiervon beabstandeten zweiten Längsführung (164) aufgenommen ist, und sich dazwischen erstreckt, und dass der ersten Längsführung (162) ein erster Linearantrieb (148) und der zweiten Längsführung (164) ein zweiter Linearantrieb (150) zugeordnet ist.

11. Werkzeugmaschine nach Anspruch 10, **dadurch gekennzeichnet, dass** sich zwischen dem Portal (16) und dem Gestell (12) Seitenverstrebungen (26, 28) erstrecken, zwischen denen die erste Längsführung (162) und die zweiten Längsführung (164) für den Werkstücktisch (100) angeordnet sind wobei die Seitenverstrebungen (26, 28) vorzugsweise einen ersten Knoten mit einer Spindelseite des Portals (16) und einen zweiten Knoten mit einer Auflageseite des Gestells (12) aufweisen, und jeweils an einem erhabenen Seitenprofil (32, 34) des Gestells (12) an dieses ankoppeln, und wobei das Gestell (12) zwei erhabene Seitenprofile (32, 34) aufweist, die relativ zu Führungsschienen (166, 168) der Längsführungen (162, 164) am Gestell (12) erhaben sind.

12. Werkzeugmaschine nach einem der vorhergehenden Ansprüche, sofern direkt oder indirekt auf Anspruch 3 rückbezogen, **dadurch gekennzeichnet, dass** der Werkstücktisch (100) zwei zueinander versetzte und angetriebene Rundtische (118, 120) aufweist, deren Drehachse (130, 132) senkrecht zur Schwenkachse des Werkstücktisches (144) ist, und dass die erste Werkzeugspindel (46) einem ersten Rundtisch (118) und die zweite Werkzeugspindel (48) einem zweiten Rundtisch (120) zugeordnet ist.

13. Werkzeugmaschine nach Anspruch 12, wobei die erste Werkzeugspindel (46) und die zweite Werkzeugspindel (48) in der zweiten Richtung (X) am Portal (16) derart verfahrbar sind, dass die erste Werkzeugspindel (46), ausgehend von ihrer primären Arbeitsposition mit Zuordnung zum ersten Rundtisch (118), in Richtung auf den zweiten Rundtisch (120) in eine sekundäre Arbeitsposition verfahrbar ist, wenn die zweite Werkzeugspindel (48) vom zweiten Rundtisch (120) wegbewegt ist, und/oder wobei die zweite Werkzeugspindel (48), ausgehend von ihrer primären Arbeitsposition mit Zuordnung zum zweiten Rundtisch (120), in Richtung auf den ersten Rundtisch (118) in eine sekundäre Arbeitsposition verfahrbar ist, wenn die erste Werkzeugspindel (46) vom ersten Rundtisch (118) wegbewegt ist.

14. Werkzeugmaschine nach einem der vorhergehenden Ansprüche, **dadurch gekennzeichnet, dass** der Werkstücktisch (100) zumindest einen Platz (114, 116) zur Aufnahme zumindest einer Palette (122, 124) aufweist, und dass bei Verwendung zweier Werkzeugspindeln (46, 48) ein erster Platz (114) der ersten Werkzeugspindel (46) und ein zweiter Platz (116) der zweiten Werkzeugspindel (48) zugeordnet ist, vorzugsweise wobei für den Werkstückwechsel ein Palettenwechsler (230) vorgesehen ist, der an einer vom Portal (16) abgewandten Seite (234) mit dem Gestell (12) koppelbar ist, wobei der Palettenwechsler (230) zur Aufnahme zweier Paletten (122, 124) von zwei Plätzen (114, 116) des Werkstücktisches (100) und zur Abgabe zweier Paletten (244, 246) an die zwei Plätze (114, 116) des Werkstücktisches (100) ausgebildet ist, und wobei der Palettenwechsler (230) einen um eine vertikale Achse (256) schwenkbaren Umsetzer (254) mit vier Koppelplätzen (262, 264, 266, 268) aufweist, die jeweils mit einer Palette (122, 124; 244, 246) koppelbar sind, um Paletten (122, 124; 244, 246) zwischen dem Werkstücktisch (100) und einer Bestückungsposition am Palettenwechsler (230) auszutauschen.

15. Werkzeugmaschine nach einem der vorhergehenden Ansprüche, **dadurch gekennzeichnet, dass** das Portal (16) eine Bedienerseite (206) der Werkzeugmaschine definiert, und dass die vom Portal (16) abgewandte Seite des Gestells (12) eine Beladeseite (208) definiert, wobei das Portal (16) vorzugsweise ferner zwei Führungsöffnungen (198, 200) aufweist, durch die eine Stirnseite von Längsführungen (162, 164) für die Bewegung des Werkstücktisches (100) in der dritten Richtung (Y) zugänglich ist.

## Claims

1. A machine tool comprising a frame (12) supporting a fixed gantry (16) for supporting at least one tool spindle (46, 48), wherein the gantry (16) has a gantry recess (36) through which a working space (38) is accessible, wherein the or each tool spindle (46, 48) is in each case movable on the gantry (16) vertically in a first direction (Z) and in a second direction (X) orthogonal to the first direction (Z), and comprising a workpiece table (100) with at least one location (114, 116) for supporting workpieces, wherein the workpiece table (100) is translationally movable in a third direction (Y) orthogonal to the first direction (Z) and the second direction (X), wherein at least one tool magazine (176, 178) is associated with the or each tool spindle (46, 48), and wherein the tool change between the or each tool spindle (46, 48) and the at least one tool magazine (176, 178) takes place in a pick-up process,
**characterized in that**
the gantry (16) has two magazine openings (192, 194) through which at least two tool magazines (176, 178) are accessible, comprising a first tool magazine (176) and a second tool magazine (178),
tools for tool changing can be fed through the two magazine openings (192, 194) provided in the gantry (16) in addition to and separately from the gantry recess (36), and
the first tool magazine (176) is arranged above a first longitudinal guide (162) and the second tool magazine (178) is arranged above a second longitudinal guide (164) for the workpiece table (100).

2. The machine tool according to claim 1, **characterized in that** the workpiece table (100) is pivotable about an axis (A) parallel to the second direction (X), wherein in each case two mutually spaced, jointly controlled drives (148, 150; 154, 156) are provided for both the translatory movement and the pivoting movement of the workpiece table (100), and wherein preferably the drives (148, 150) for the translatory movement of the workpiece table (100) and/or the drives (154, 156) for the pivoting movement of the workpiece table (100) are synchronously controlled.

3. The machine tool according to claim 1 or 2, **characterized in that** a first tool spindle (46) and a second tool spindle (48) are arranged on the gantry (16), and that the workpiece table (100) comprises a first workpiece support location (114) which is associated with the first tool spindle (46) and a second workpiece support location (116) which is associated with the second tool spindle (48), wherein the first tool spindle (46) and the second tool spindle (48) are preferably movable together and synchronously in the second direction (X), and wherein a spindle distance (68) is adapted to a distance between the first workpiece support location (114) and the second workpiece support location (116).

4. The machine tool according to any one of the preceding claims, **characterized in that** the at least two tool magazines (176, 178) extend, at least sectionally, into the magazine openings (192, 194) in the gantry (16), wherein the at least two tool magazines (176, 178) are preferably configured as chain magazines.

5. The machine tool according to any one of the preceding claims, **characterized in that** the at least two tool magazines (176, 178) are located in a tool change area (220, 222) outside the working space, and that the at least one tool spindle (46, 48) is movable between a working position in the working space (38) and a tool changing position in the tool change area (220, 222).

6. The machine tool according to claim 5, **characterized in that** a first tool magazine (176) is arranged in a first tool change area (220) and a second tool magazine (178) is arranged in a second tool change area (222), and that the working space (38) is arranged between the first tool change area (220) and the second tool change area (222), and wherein preferably, when using a first tool spindle (46) and a second tool spindle (48), the first tool spindle (46) and the second tool spindle (48) are movable independently of one another in the second direction (X) for tool changing, wherein the first tool spindle (46) is movable between the working space (38) and the first tool change area (220), and wherein the second tool spindle (48) is movable between the working space (38) and the second tool change area (222).

7. The machine tool according to claim 5 or 6, **characterized in that** the or each tool spindle (46, 48) is vertically movable in the tool change area (220, 222) to change a machining tool, and that at least one tool location (182, 184) of at least one tool magazine (176, 178) of the at least two tool magazines (176, 178) is vertically accessible from above for the associated tool spindle (46, 48).

8. The machine tool according to any one of the preceding claims, **characterized in that** at least one tool magazine (176, 178) of the at least two tool magazines (176, 178), together with a further tool magazine (276, 278) that is arranged in the same tool change area (220, 222), forms a magazine arrangement (282, 284) with two magazines (176, 276; 178, 278), which are offset from one another in such a way that each of the two magazines (176, 276; 178, 278) of the magazine arrangement (282, 284) is accessible for the associated tool spindle (46, 48), wherein the magazine arrangement (282, 284) preferably comprises, with respect to the working space (38), an upper magazine (176, 178) and a lower magazine (276, 278), and wherein the lower magazine (176, 178) is offset from the upper magazine (276, 278) in the direction towards the working space (38).

9. The machine tool according to any one of the preceding claims, when dependent directly or indirectly on claim 2, **characterized in that** the workpiece table (100) is mounted at a first pivot bearing (158) and a second pivot bearing (160) spaced therefrom, and extends therebetween as a cradle (102), and that the first drive (154) is associated with the first pivot bearing (158) as a first pivot drive and the second drive (156) is associated with the second pivot bearing (160) as a second pivot drive.

10. The machine tool according to any one of the preceding claims, when dependent directly or indirectly on claim 2, **characterized in that** the workpiece table (100) is mounted on and extends between a first longitudinal guide (162) and a second longitudinal guide (164) spaced therefrom, and that a first linear drive (148) is associated with the first longitudinal guide (162) and a second linear drive (150) is associated with the second longitudinal guide (164).

11. The machine tool according to claim 10, **characterized in that** side struts (26, 28) extend between the gantry (16) and the frame (12), between which the first longitudinal guide (162) and the second longitudinal guide (164) for the workpiece table (100) are arranged, wherein the side struts (26, 28) preferably have a first node with a spindle side of the gantry (16) and a second node with a support side of the frame (12), and each couple to the frame (12) at a raised side profile (32, 34) thereof, and wherein the frame (12) comprises two raised side profiles (32, 34) which are raised relative to guide rails (166, 168) of the longitudinal guides (162, 164) on the frame (12).

12. The machine tool according to any one of the preceding claims, when dependent directly or indirectly on claim 3, **characterized in that** the workpiece table (100) comprises two mutually offset and driven rotary tables (118, 120), the axes of rotation (130, 132) of which are perpendicular to the pivot axis (144) of the workpiece table, and that the first tool spindle (46) is associated with a first rotary table (118) and the second tool spindle (48) is associated with a second rotary table (120).

13. The machine tool according to claim 12, wherein the first tool spindle (46) and the second tool spindle (48) are movable in the second direction (X) on the gantry (16) in such a way that the first tool spindle (46), starting from its primary working position associated with the first rotary table (118), is movable in the direction towards the second rotary table (120) into a secondary working position when the second tool spindle (48) is moved away from the second rotary table (120), and/or wherein the second tool spindle (48), starting from its primary working position associated with the second rotary table (120), is movable in the direction towards the first rotary table (118) into a secondary working position when the first tool spindle (46) is moved away from the first rotary table (118).

14. The machine tool according to any one of the preceding claims, **characterized in that** the workpiece table (100) has at least one location (114, 116) for supporting at least one pallet (122, 124), and that, when using two tool spindles (46, 48), a first location (114) is associated with the first tool spindle (46) and a second location (116) is associated with the second tool spindle (48), preferably wherein for the workpiece change a pallet changer (230) is provided, which is configured to be coupled to the frame (12) on a side (234) facing away from the gantry (16), wherein the pallet changer (230) is configured to receive two pallets (122, 124) from two locations (114, 116) of the workpiece table (100) and to deliver two pallets (244, 246) to the two locations (114, 116) of the workpiece table (100), and wherein the pallet changer (230) has a transfer unit (254) which is pivotable about a vertical axis (256) and has four coupling locations (262, 264, 266, 268), which are each configured to be coupled to a pallet (122, 124; 244, 246) to exchange pallets (122, 124; 244, 246) between the workpiece table (100) and a loading position on the pallet changer (230).

15. The machine tool according to any one of the preceding claims, **characterized in that** the gantry (16) defines an operator side (206) of the machine tool, and that the side of the frame (12) facing away from the gantry (16) defines a loading side (208), wherein the gantry (16) preferably further comprises two guide openings (198, 200) through which an end face of longitudinal guides (162, 164) for the movement of the workpiece table (100) in the third direction (Y) is accessible.

## Revendications

1. Machine-outil comportant un bâti (12) qui porte un portique (16) fixe pour la réception d'au moins une broche porte-outil (46, 48), dans laquelle le portique (16) présente un évidement de portique (36) à travers lequel un espace de travail (38) est accessible, dans laquelle la ou chaque broche porte-outil (46, 48) peut être déplacée sur le portique (16) respectivement dans une première direction (Z) verticale et une deuxième direction (X) orthogonale à la première direction (Z), et comportant une table porte-pièce (100) comportant au moins un emplacement (114, 116) pour la réception d'une pièce, dans laquelle la table porte-pièce (100) peut être déplacée en translation dans une troisième direction (Y) orthogonale à la première direction (Z) et à la deuxième direction (X), dans laquelle au moins un magasin d'outils (176, 178) est associé à la ou à chaque broche porte-outil (46, 48), et dans laquelle le changement d'outils entre la ou chaque broche porte-outil (46, 48) et l'au moins un magasin d'outils (176, 178) est effectué selon le procédé de ramassage,
**caractérisée en ce que**
le portique (16) présente deux ouvertures de magasins (192, 194) à travers lesquelles au moins deux magasins d'outils (176, 178) sont accessibles, comprenant un premier magasin d'outils (176) et un deuxième magasin d'outils (178),
des outils peuvent être amenés pour le changement d'outils à travers les deux ouvertures de magasins (192, 194) prévues en plus et séparément de l'évidement de portique (36) dans le portique (16), et
le premier magasin d'outils (176) est disposé au-dessus d'un premier guide longitudinal (162) et le deuxième magasin d'outils (178) est disposé au-dessus d'un second guide longitudinal (164) pour la table porte-pièce (100).

2. Machine-outil selon la revendication 1, **caractérisée en ce que** la table porte-pièce (100) peut pivoter autour d'un axe (A) parallèle à la deuxième direction (X), dans laquelle, tant pour le mouvement de translation que pour le mouvement de pivotement de la table porte-pièce (100), respectivement deux entraînements (148, 150 ; 154, 156) espacés l'un de l'autre et commandés conjointement sont prévus, et dans laquelle de préférence les entraînements (148, 150) pour le mouvement de translation de la table porte-pièce (100) et/ou les entraînements (154, 156) pour le mouvement de pivotement de la table porte-pièce (100) sont commandés de manière synchrone.

3. Machine-outil selon la revendication 1 ou 2, **caractérisée en ce qu'**une première broche porte-outil (46) et une seconde broche porte-outil (48) sont disposées sur le portique (16), **et en ce que** la table porte-pièce (100) présente un premier emplacement de réception de pièce (114), lequel est associé à la première broche porte-outil (46), et un second emplacement de réception de pièce (116), lequel est associé à la seconde broche porte-outil (48), dans laquelle la première broche porte-outil (46) et la seconde broche porte-outil (48) peuvent de préférence être déplacées conjointement et de manière synchrone dans la deuxième direction (X), et dans laquelle un espacement entre broches (68) est adapté à une distance entre le premier emplacement de réception de pièce (114) et le second emplacement de réception de pièce (116).

4. Machine-outil selon l'une des revendications précédentes,
**caractérisée en ce que** les au moins deux magasins d'outils (176, 178) s'étendent au moins dans certaines sections dans les ouvertures de magasins (192, 194) dans le portique (16), dans laquelle les au moins deux magasins d'outils (176, 178) sont de préférence conçus comme des magasins à chaîne.

5. Machine-outil selon l'une des revendications précédentes,
**caractérisée en ce que** les au moins deux magasins d'outils (176, 178) se trouvent dans une zone de changement d'outils (220, 222) à l'extérieur de l'espace de travail, **et en ce que** l'au moins une broche porte-outil (46, 48) peut être déplacée entre une position de travail dans l'espace de travail (38) et une position de changement d'outils dans la zone de changement d'outils (220, 222).

6. Machine-outil selon la revendication 5, **caractérisée en ce qu'**un premier magasin d'outils (176) est disposé dans une première zone de changement d'outils (220) et un deuxième magasin d'outils (178) est disposé dans une seconde zone de changement d'outils (222), **et en ce que** l'espace de travail (38) est disposé entre la première zone de changement d'outils (220) et la seconde zone de changement d'outils (222), et dans laquelle, de préférence, lors de l'utilisation d'une première broche porte-outil (46) et d'une seconde broche porte-outil (48), la première broche porte-outil (46) et la seconde broche porte-outil (48) peuvent être déplacées indépendamment l'une de l'autre dans la deuxième direction (X) pour le changement d'outils, dans laquelle la première broche porte-outil (46) peut être déplacée entre l'espace de travail (38) et la première zone de changement d'outils (220), et dans laquelle la seconde broche porte-outil (48) peut être déplacée entre l'espace de travail (38) et la seconde zone de changement d'outils (222).

7. Machine-outil selon la revendication 5 ou 6, **caractérisée en ce que** la ou chaque broche porte-outil (46, 48) peut être déplacée verticalement dans la zone de changement d'outils (220, 222) afin de changer un outil d'usinage, **et en ce qu'**au moins un emplacement d'outils (182, 184) d'au moins un magasin d'outils (176, 178) des au moins deux magasins d'outils (176, 178) est accessible verticalement par le haut à la broche porte-outil (46, 48) associée.

8. Machine-outil selon l'une des revendications précédentes,
**caractérisée en ce qu'**au moins un magasin d'outils (176, 178) des au moins deux magasins d'outils (176, 178) forme, conjointement avec un autre magasin d'outils (276, 278) disposé dans la même zone de changement d'outils (220, 222), un ensemble de magasins (282, 284) comportant deux magasins (176, 276 ; 178, 278) décalés l'un par rapport à l'autre de telle sorte que chacun des deux magasins (176, 276 ; 178, 278) de l'ensemble de magasins (282, 284) est accessible à la broche porte-outil (46, 48) associée, dans laquelle l'ensemble de magasins (282, 284) présente, par rapport à l'espace de travail (38), de préférence un magasin supérieur (176, 178) et un magasin inférieur (276, 278), et dans laquelle le magasin inférieur (176, 178) est décalé du magasin supérieur (276, 278) en direction de l'espace de travail (38).

9. Machine-outil selon l'une des revendications précédentes, en référence directe ou indirecte à la revendication 2, **caractérisée en ce que** la table porte-pièce (100) est reçue sur un premier palier de pivotement (158) et sur un second palier de pivotement (160) espacé de celui-ci, et s'étend entre eux en tant que berceau (102), **et en ce que** le premier entraînement (154) est associé au premier palier de pivotement (158) en tant que premier entraînement de pivotement et le second entraînement (156) est associé au second palier de pivotement (160) en tant que second entraînement de pivotement.

10. Machine-outil selon l'une des revendications précédentes, en référence directe ou indirecte à la revendication 2, **caractérisée en ce que** la table porte-pièce (100) est reçue sur un premier guide longitudinal (162) et sur un second guide longitudinal (164) espacé de celui-ci, et s'étend entre eux, **et en ce qu'**un premier entraînement linéaire (148) est associé au premier guide longitudinal (162) et un second entraînement linéaire (150) est associé au second guide longitudinal (164).

11. Machine-outil selon la revendication 10, **caractérisée en ce que** des entretoises latérales (26, 28) s'étendent entre le portique (16) et le bâti (12), entre lesquelles sont disposés le premier guide longitudinal (162) et le second guide longitudinal (164) pour la table porte-pièce (100), dans laquelle les entretoises latérales (26, 28) présentent de préférence un premier nœud avec un côté broche du portique (16) et un second nœud avec un côté appui du bâti (12), et s'accouplent au bâti (12) à respectivement un profilé latéral en relief (32, 34) de celui-ci, et dans laquelle le bâti (12) présente deux profilés latéraux en relief (32, 34) qui sont en relief par rapport à des rails de guidage (166, 168) des guides longitudinaux (162, 164) sur le bâti (12).

12. Machine-outil selon l'une des revendications précédentes, en référence directe ou indirecte à la revendication 3, **caractérisée en ce que** la table porte-pièce (100) présente deux tables circulaires (118, 120) décalées et entraînées l'une par rapport à l'autre, dont l'axe de rotation (130, 132) est perpendiculaire à l'axe de pivotement de la table porte-pièce (144), **et en ce que** la première broche porte-outil (46) est associée à une première table circulaire (118) et la seconde broche porte-outil (48) est associée à une seconde table circulaire (120).

13. Machine-outil selon la revendication 12, dans laquelle la première broche porte-outil (46) et la seconde broche porte-outil (48) peuvent être déplacées dans la deuxième direction (X) sur le portique (16) de telle sorte que la première broche porte-outil (46), en partant de sa position de travail primaire en association avec la première table circulaire (118), peut être déplacée en direction de la seconde table circulaire (120) dans une position de travail secondaire lorsque la seconde broche porte-outil (48) est éloignée de la seconde table circulaire (120), et/ou dans laquelle la seconde broche porte-outil (48), en partant de sa position de travail primaire en association avec la seconde table circulaire (120), peut être déplacée en direction de la première table circulaire (118) dans une position de travail secondaire lorsque la première broche porte-outil (46) est éloignée de la première table circulaire (118).

14. Machine-outil selon l'une des revendications précédentes,
**caractérisée en ce que** la table porte-pièce (100) présente au moins un emplacement (114, 116) pour la réception d'au moins une palette (122, 124), **et en ce que,** lors de l'utilisation de deux broches porte-outil (46, 48), un premier emplacement (114) est associé à la première broche porte-outil (46) et un second emplacement (116) est associé à la seconde broche porte-outil (48), de préférence dans laquelle un changeur de palette (230) est prévu pour le changement de pièce, lequel changeur de palette peut être accouplé au bâti (12) sur un côté (234) opposé au portique (16), dans laquelle le changeur de palettes (230) est conçu pour recevoir deux palettes (122, 124) depuis deux emplacements (114, 116) de la table porte-pièce (100) et pour distribuer deux palettes (244, 246) aux deux emplacements (114, 116) de la table porte-pièces (100), et dans laquelle le changeur de palettes (230) présente un élément de déplacement (254) pouvant pivoter autour d'un axe vertical (256) et comportant quatre emplacements d'accouplement (262, 264, 266, 268), lesquels sont respectivement accouplés à une palette (122, 124 ; 244, 246) afin d'échanger des palettes (122, 124 ; 244, 246) entre la table porte-pièce (100) et une position d'équipement sur le changeur de palettes (230).

15. Machine-outil selon l'une des revendications précédentes,
**caractérisée en ce que** le portique (16) définit un côté opérateur (206) de la machine-outil, **et en ce que** le côté du bâti (12) opposé au portique (16) définit un côté chargement (208), dans laquelle le portique (16) présente de préférence en outre deux ouvertures de guidage (198, 200) à travers lesquelles un côté frontal de guides longitudinaux (162, 164) est accessible pour le déplacement de la table porte-pièce (100) dans la troisième direction (Y).
